# EUROPEAN PATENT APPLICATION

(11) **EP 4 205 978 A1**
(43) Date of publication of application: **05.07.2023**
(21) Application number: 22172954.4
(22) Date of filing: 12.05.2022
(51) Int. Cl.: B32B 38/18, B32B 38/10

(54) **SYSTEM FOR MANUFACTURING 3D PROTECTIVE FILM WITH IMPROVED POSITIONING PRECISION DURING MANUFACTURING AND IMPROVED CONVENIENCE DURING ATTACHMENT AND METHOD OF ATTACHING PROTECTIVE FILM**

(30) Priority: 04.01.2022 KR 20220001078
(71) Applicant: Realook & Company Co., Ltd., Gyeonggi-do 16514 (KR)
(72) Inventor: LIM, Nam Il, 16514 Suwon-si, Gyeonggi-do (KR)
(74) Representative: Zimmermann, Tankred Klaus

(57) **Abstract**

An embodiment of the present invention provides a technology, in which a detection indicator such is an AprilTag is formed on a protective film, such that position tolerance is adjusted at the time of performing a forming process on the protective film, and an image matched with the detection indicator formed on the protective film is loaded on a screen such as a smartphone, such that the protective film attached to the screen on the basis of the image. A system for manufacturing a 3D protective film with improved positioning precision during manufacturing and improved convenience during attachment according to the embodiment of the present invention includes a raw material processing device configured to process an intermediate raw material, which is a raw material of an intermediate liquid crystal protection film included in the protective film for protecting a liquid crystal surface of the electronic device, an upper raw material, which is a raw material of a hard coating surface protection film formed on an upper portion of the intermediate liquid crystal protection film, and a lower raw material which is a raw material of an adhesive surface protection film formed on a lower portion of the intermediate liquid crystal protection film, a laminating device configured to form a raw lamination material by laminating the upper raw material, the lower raw material, and the intermediate raw material, a shape processing device configured to form the pre-formed protective film by processing the raw lamination material, an indicator forming device configured to form a film detection indicator having a predetermined shape on the protective film, and a forming apparatus configured to perform a forming process on the protective film.

## Description

### CROSS REFERENCE TO RELATED APPLICATION

The present application claims priority to Korean Patent Application No. 10-2022-0001078, filed January 4, 2022, the entire contents of which is incorporated herein for all purposes by this reference.

### BACKGROUND OF THE INVENTION

### Field of the Invention

The present invention relates to a system for manufacturing a 3D protective film with improved positioning precision during manufacturing and improved convenience during attachment and a method of attaching protective film, and more particularly, to a technology, in which a detection indicator such as an AprilTag is formed on a protective film, such that position tolerance is adjusted at the time of performing a forming process on the protective film, and an image matched with the detection indicator formed on the protective film is loaded on a screen such as a smartphone, such that the protective film attached to the screen on the basis of the image.

### Description of the Related Art

There have been consistent and continuous attempts to restore an object to a three-dimensional object in various industries. The development of computer vision technologies enables the actual restoration of the object to the three-dimensional object. Among the technologies, the technology using laser beams or patterned light exhibits high accuracy but has drawbacks in that facility cost is high and it is difficult to actually use the technology. In contrast, three-dimensional restoration technologies, which do not use an artificial light source, have lower precision than the active method but have advantages in that facilities are simple.

Studies are being actively conducted on the technology using a camera, among the technologies, by virtue of improvement of resolution and performance of the camera, and this technology uses a method that uses structure-from-motion (SFM), stereo vision, or the like, and a space carving method that defines the space as voxels, projects the voxels on each image, and leaves the voxels that satisfy color consistency and visibility. However, there is a problem in that it is difficult to apply these methods when a restoration object has a lack of texture or has almost similar colors.

In contrast, an AprilTag is a visual criterion useful for various tasks including augmented reality, robot engineering, and camera correction. The target may be easily created even by a general printer, and it is possible to calculate accurate 3D positions, directions, and the like of the tags by using detection software and the camera even though there is a restriction in lighting or viewing angle.

The AprilTag is conceptually similar to a QR code in that the AprilTag is a kind of two-dimensional bar code. The AprilTag is designed to encode a very small data payload (4 to 12 bits) and enables a powerful and longer detection range, such that the AprilTag may be used to calculate a 3D position with a high detection rate and accuracy.

Korean Patent Application Laid-Open No. 10-2021-0057586 (entitled Method and System for Camera-Based Visual Localization Using Blind Watermarking) discloses a localization method used for a computer system, in which the computer system includes one or more processors configured to execute computer-readable commands stored in a memory, and the localization method includes: a step of recognizing, by the one or more processors, a synthetic image including an invisible marker from a query image; and a step of calculating, by the one or more processors, a pose of the query image on the basis of a coordinate matched with an identification tag of the marker.

### Document of Related Art

(Patent Document 0001) Korean Patent Laid-Open No. 10-2021-0057586

### SUMMARY OF THE INVENTION

The present invention is proposed to solve these problems and aims to adjust position tolerance by forming a detection indicator such as an AprilTag on a protective film at the time of performing a forming process on the protective film.

The present invention also aims to load an image, which is matched with a detection indicator formed on a protective film, onto a screen such as a smartphone, and attach the protective film to the screen on the basis of the image.

Technical problems to be solved by the present invention are not limited to the above-mentioned technical problems, and other technical problems, which are not mentioned above, may be clearly understood from the following descriptions by those skilled in the art to which the present invention pertains.

To achieve the above-mentioned objects, the present invention provides a system for manufacturing a 3D protective film with improved positioning precision during manufacturing and improved convenience during attachment, the system including: a raw material processing device processing an intermediate raw material, which is a raw material of an intermediate liquid crystal protection film included in the protective film, an upper raw material, which is a raw material of a hard coating surface protection film formed on an upper portion of the intermediate liquid crystal protection film, and a lower raw material which is a raw material of an adhesive surface protection film formed on a lower portion of the intermediate liquid crystal protection film; a laminating device forming a raw lamination material by laminating the upper raw material, the lower raw material, and the intermediate raw material; a shape processing device forming the pre-formed protective film by processing the raw lamination material; an indicator forming device forming film detection indicator having a predetermined shape on the protective film; and a forming apparatus performing a forming process on the protective film and having a tolerance detection indicator formed in a predetermined shape therein, in which the forming process is selectively performed on the protective film by the forming apparatus, and in which a movement and a position of the protective film are corrected by the film detection indicator when the forming process is performed on the protective film, such that precision in forming the protective film is improved.

In the embodiment of the present invention, the indicator forming device may print or imprint the film detection indicator on the intermediate liquid crystal protection film, the hard coating surface protection film, or the adhesive surface protection film.

In the embodiment of the present invention, the film detection indicator may be an AprilTag, an Aruco marker, an ARtag, or an ARToolKit.

In the embodiment of the present invention, the forming apparatus may have a tolerance detection indicator formed in a predetermined shape therein, and the movement and the position of the protective film may be corrected by the tolerance detection indicator when the forming process is performed on the protective film, such that precision in forming the protective film is improved.

In the embodiment of the present invention, the tolerance detection indicator may be an AprilTag, an Aruco marker, an ARtag, or an ARToolKit.

In the embodiment of the present invention, the forming apparatus may include: a frame; a plurality of modules coupled to the frame and performing the forming process on the protective film; a transfer unit provided in the frame and picking up the protective film in the frame and then moving the protective film; an image capturing unit coupled to the transfer unit and creating a captured image by capturing an image of the tolerance detection indicator or the film detection indicator; and a control unit deriving a three-dimensional position change value of the protective film or any one of a plurality of components installed in the plurality of modules by analyzing the captured image received from the image capturing unit.

In the embodiment of the present invention, the tolerance detection indicator may be printed or imprinted on each of the plurality of modules.

In the embodiment of the present invention, the control unit may transmit a control signal to the transfer unit so that the transfer of the protective film is controlled on the basis of a three-dimensional position change value of the tolerance detection indicator.

In the embodiment of the present invention, the control unit may transmit a control signal to the transfer unit so that the transfer of the protective film is controlled on the basis of a three-dimensional position change value of the film detection indicator.

In the embodiment of the present invention, the transfer unit may include a robot arm picking up and moving a pre-formed protective film or a post-formed protective film.

In the embodiment of the present invention, the image capturing unit may include a robot arm camera coupled to the robot arm and capturing an image of the film detection indicator or the tolerance detection indicator.

In the embodiment of the present invention, the electronic device may include a liquid crystal display.

To achieve the above-mentioned objects, the present invention provides a method of attaching a protective film, the method including: a first step of recognizing, by an electronic device, a predetermined uniform resource locator (URL), a uniform resource name (URN), or a uniform resource identifier (URI) by placing an NFC tag adjacent to the electronic device or using a camera of the electronic device; a second step of accessing, by the electronic device, the URL, the URN, or the URI and displaying a matching image, which is an image matched with a film detection indicator formed on the protective film matched with the electronic device, on a display of the electronic device; and a third step of attaching the protective film to a position at which the film detection indicator and the matching image correspond to each other on the display.

To achieve the above-mentioned objects, the present invention provides a method of attaching a protective film, the method including: a first step of placing an NFC tag adjacent to an electronic device and recognizing, by the electronic device, information stored in the NFC tag; a second step of displaying a matching image, which is an image matched with a film detection indicator formed on the protective film matched with the electronic device, on a display of the electronic device; and a third step of attaching the protective film to a position at which the film detection indicator and the matching image correspond to each other on the display.

According to the present invention configured as described above, the predetermined detection indicator is formed on the protective film, and the movement and position of the protective film are corrected. Further, the detection indicator is formed on each of the components in the forming apparatus, and the position of the protective film is controlled while the protective film is moved. Therefore, it is possible to improve precision at the time of performing the forming process on the protective film.

In addition, according to the present invention, the matching image, which is the image matched with the formed detection indicator, is loaded onto the screen such as the smartphone, and the detection indicator is attached to be matched with the matching image. Therefore, it is possible to improve the accuracy in attaching the protective film.

The effects of the present invention are not limited to the above-mentioned effects, and it should be understood that the effects of the present invention include all effects that may be derived from the detailed description of the present invention or the appended claims.

### BRIEF DESCRIPTION OF THE DRAWINGS

FIG. 1 is a schematic view of a manufacturing system according to an embodiment of the present invention.
FIG. 2 is a schematic view of a protective film according to the embodiment of the present invention.
FIG. 3 is a schematic view of an electronic device according to the embodiment of the present invention.
FIG. 4 is a partial side view of the protective film according to the embodiment of the present invention.
FIGS. 5 and 6 are views illustrating images of detection indicators according to a plurality of embodiments of the present invention.
FIG. 7 is a view illustrating images showing analysis of the detection indicators according to the embodiment of the present invention.
FIG. 8 is a front view of a forming apparatus according to the embodiment of the present invention.
FIG. 9 is a rear view of the forming apparatus according to the embodiment of the present invention.
FIG. 10 is a top plan view of the forming apparatus according to the embodiment of the present invention.
FIG. 11 is an interior perspective view of the forming apparatus according to the embodiment of the present invention.
FIG. 12 is an interior front view of the forming apparatus according to the embodiment of the present invention.
FIG. 13 is an interior rear view of the forming apparatus according to the embodiment of the present invention.
FIG. 14 is a front view of a transfer unit according to the embodiment of the present invention.
FIG. 15 is a front view and a top plan view of a loading arm unit according to the embodiment of the present invention.
FIG. 16 is a front view and a top plan view of an unloading arm unit according to the embodiment of the present invention.
FIG. 17 is a perspective view of a loading module according to the embodiment of the present invention.
FIG. 18 is an interior side view of the loading module according to the embodiment of the present invention.
FIG. 19 is an enlarged view of a part of the loading module according to the embodiment of the present invention.
FIG. 20 is an interior top plan view of the loading module according to the embodiment of the present invention.
FIG. 21 is a perspective view of an alignment module according to the embodiment of the present invention.
FIG. 22 is an interior side view of the alignment module according to the embodiment of the present invention.
FIG. 23 is an interior top plan view of the alignment module according to the embodiment of the present invention.
FIG. 24 is a perspective view of an unloading module according to the embodiment of the present invention.
FIG. 25 is an interior side view of the unloading module according to the embodiment of the present invention.
FIG. 26 is an enlarged view illustrating a part of the unloading module according to the embodiment of the present invention.
FIG. 27 is an interior top plan view of the unloading module according to the embodiment of the present invention.
FIGS. 28 and 29 are perspective views of a forming module according to the embodiment of the present invention.
FIG. 30 is an interior side view of the forming module according to the embodiment of the present invention.
FIG. 31 is an interior top plan view of the forming module according to the embodiment of the present invention.
FIG. 32 is a schematic view of a docking connector according to the embodiment of the present invention.
FIG. 33 is an interior top plan view and a side view of a lower module according to the embodiment of the present invention.

### DETAILED DESCRIPTION OF THE INVENTION

Hereinafter, the present invention will be described with reference to the accompanying drawings. However, the present invention may be implemented in various different ways and is not limited to the embodiments described herein. A part irrelevant to the description will be omitted in the drawings in order to clearly describe the present invention, and similar constituent elements will be designated by similar reference numerals throughout the specification.

Throughout the present specification, when one constituent element is referred to as being "connected to (coupled to, in contact with, or linked to)" another constituent element, one constituent element can be "directly connected to" the other constituent element, and one constituent element can also be "indirectly connected to" the other element with other elements interposed therebetween. In addition, unless explicitly described to the contrary, the word "comprise/include" and variations such as "comprises/includes" or "comprising/including" will be understood to imply the inclusion of stated elements, not the exclusion of any other elements.

The terms used in the present specification are used to just describe a specific embodiment and do not intend to limit the present invention. Singular expressions include plural expressions unless clearly described as different meanings in the context. In the present specification, it should be understood the terms "comprises," "comprising," "includes," "including," "containing," "has," "having" or other variations thereof are inclusive and therefore specify the presence of stated features, integers, steps, operations, elements, components, or combinations thereof, but do not preclude the presence or addition of one or more other features, integers, steps, operations, elements, components, or combinations thereof.

Hereinafter, the present invention will be described in detail with reference to the accompanying drawings.

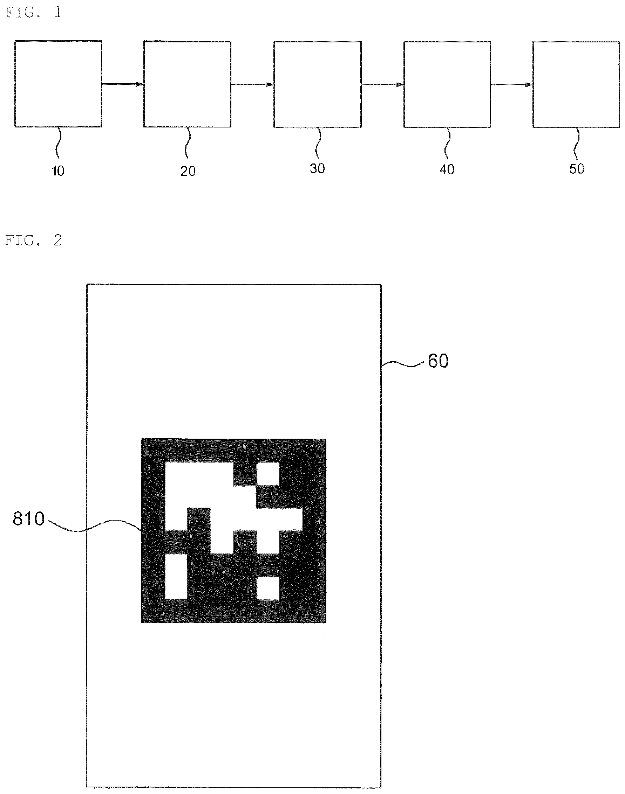

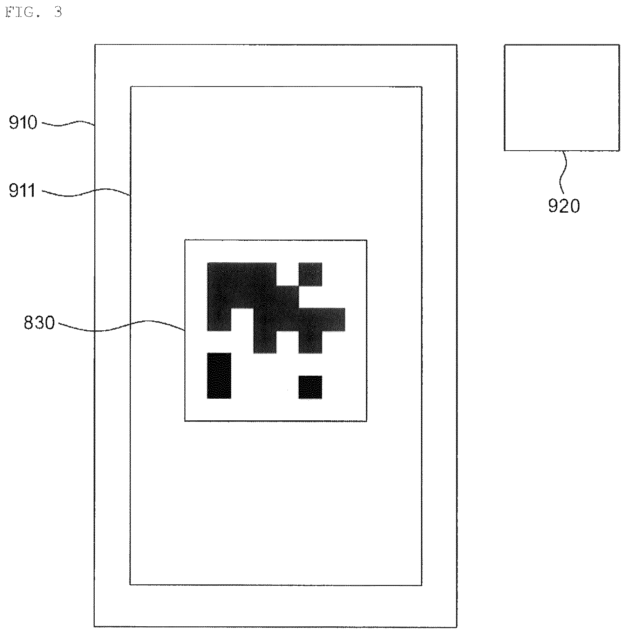

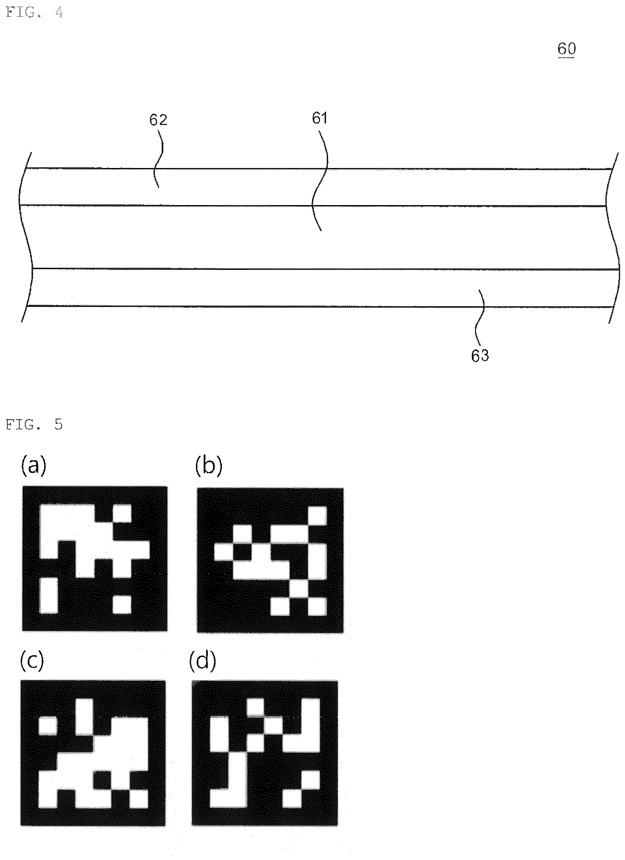

FIG. 1 is a schematic view of a manufacturing system according to an embodiment of the present invention, FIG. 2 is a schematic view of a protective film 60 according to the embodiment of the present invention, and FIG. 3 is a schematic view of an electronic device 910 according to the embodiment of the present invention. Further, FIG. 4 is a partial side view of the protective film 60 according to the embodiment of the present invention.

As illustrated in FIGS. 1 to 4, the manufacturing system according to the present invention includes: a raw material process ing device 10 processing an intermediate raw material, which is a raw material of an intermediate liquid crystal protection film 61 included in the protective film 60 for protecting a liquid crystal surface of the electronic device, an upper raw material, which is a raw material of a hard coating surface protection film 62 formed on an upper portion of the intermediate liquid crystal protection film 61, and a lower raw material which is a raw material of an adhesive surface protection film 63 formed on a lower portion of the intermediate liquid crystal protection film 61; a laminating device 20 forming a raw lamination material by laminating the upper raw material, the lower raw material, and the intermediate raw material; a shape processing device 30 forming the pre-formed protective film 60 by processing the raw lamination material; an indicator forming device 40 forming a film detection indicator 810 having a predetermined shape on the protective film 60; and a forming apparatus 50 performing a forming process on the protective film 60. The electronic device may be a smartphone, a tablet PC, or the like having a liquid crystal display.

In this case, the forming of the protective film 60 may be selectively performed by the forming apparatus 50. That is, the protective film 60 may have the film detection indicator 810 regardless of whether the forming of the protective film 60 is performed or not. Further, during the forming of the protective film 60, a movement and position of the protective film 60 may be corrected by the film detection indicator 810, thereby improving precision.

Alternatively, the forming apparatus 50 may have therein a tolerance detection indicator 820 having a predetermined shape. During the forming of the protective film 60, a movement and position of the protective film 60 may be corrected by the tolerance detection indicator 820, thereby improving precision in forming the protective film 60.

Since the forming of the protective film 60 is selectively performed, an embodiment will be described below in which the forming of the protective film 60 is performed so that all the processes are expressed. Further, in the embodiment, the forming of the protective film 60 by using the film detection indicator 810 or the tolerance detection indicator 820 will also be described.

The raw material processing device 10 processes and manufactures the upper raw material, the lower raw material, and the intermediate raw material separately. The raw material processing device 10 may process the raw materials through a roll-to-roll process. However, but the present invention is not limited thereto, and the raw materials may be processed in various ways.

The raw materials processed by the raw material processing device 10 may be transferred to the laminating device 20. The laminating device 20 may process the raw lamination material by placing the upper raw material on the upper portion of the intermediate raw material, placing the lower raw material on the lower portion of the intermediate raw material, and then pressing the upper raw material, the lower raw material, and the intermediate raw material.

The raw lamination material processed by the laminating device 20 may be transferred to the shape processing device 30. The shape processing device 30 may form a plurality of protective films 60 by processing the raw lamination material. The protective film 60 formed as described above may be formed such that the intermediate liquid crystal protection film 61 is formed on the lowermost adhesive surface protection film 63 and the hard coating surface protection film 62 is formed on the intermediate liquid crystal protection film 61.

The pre-formed protective film 60 processed by the shape processing device 30 may be transferred to the indicator forming device 40. The indicator forming device 40 may form the film detection indicator 810 on the pre-formed protective film 60. In this case, the film detection indicator 810 may be printed on an upper surface of the pre-formed protective film 60.

In the embodiment of the present invention, the configuration has been described in which the protective film 60 formed by the shape processing device 30 is transferred to the indicator forming device 40 and the film detection indicator 810 is formed on the protective film 60. However, the present invention is not necessarily limited thereto.

That is, the indicator forming device 40 may form the film detection indicator on any one selected from the intermediate liquid crystal protection film 61, the hard coating surface protection film 62, and the adhesive surface protection film 63. In this case, the indicator forming device 40 may print or imprint the film detection indicator 810 on an object on which the film detection indicator 810 is to be formed. However, the present invention is not limited thereto, and other methods such as a method of attaching the film detection indicator 810 may be used.

The pre-formed protective film 60 on which the film detection indicator 810 is formed by the indicator forming device 40 may be transferred to the forming apparatus 50. The forming apparatus 50 may perform the forming of the protective film 60 according to the present invention.

Transfer devices for transferring workpieces formed by the devices for performing the above-mentioned processing may be disposed between the devices for performing the above-mentioned processing. In this case, the transfer device may include a conveyor belt.

As described above, the pre-formed protective film 60 having the film detection indicator 810 may be formed as the sequential processes are performed by the raw material processing device 10, the laminating device 20, and the shape processing device 30. When the forming of the protective film 60 is performed by the film detection indicator 810 and the tolerance detection indicator 820, the movement and position of the protective film 60 may be corrected, thereby improving precision. Hereinafter, the contents related to the film detection indicator 810, the tolerance detection indicator 820, and the forming apparatus 50 will be described in detail.

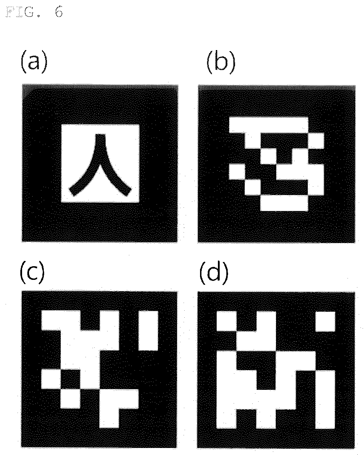

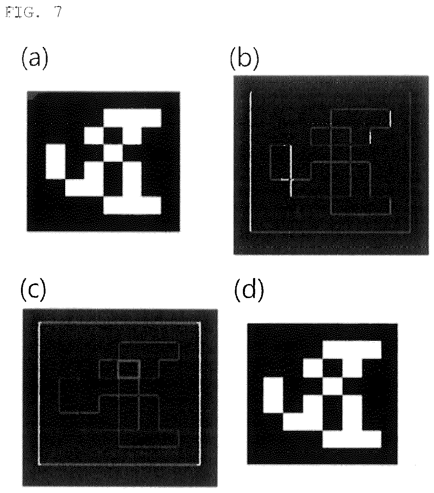

FIGS. 5 and 6 are views illustrating images of detection indicators according to a plurality of embodiments of the present invention. Further, FIG. 7 is a view illustrating images showing analysis of the detection indicators according to the embodiment of the present invention. The detection indicators may be used as the film detection indicator 810 and the tolerance detection indicator 820. FIG. 7 will be described in detail in respect to the following analysis of captured images.

In this case, FIGS. 5A to 5D illustrate images showing AprilTags according to different embodiments. Further, FIG. 6A illustrates an image in respect to an ARToolKit, FIG. 6B illustrates an image in respect to an ARtag, FIG. 6C illustrates an image in respect to an AprilTag, and FIG. 6D illustrates an image in respect to an Aruco marker.

The film detection indicator 810 may be the AprilTag, the Aruco marker, the ARtag, or the ARToolKit. Likewise, the tolerance detection indicator 820 may be the AprilTag, the Aruco marker, the ARtag, or the ARToolKit.

The film detection indicator 810 formed on the protective film 60 may be used when the user attaches the protective film 60 to a display 911 of the electronic device 910. Further, an image of the film detection indicator 810 is captured by the forming apparatus 50, and the image of the film detection indicator 810 may be used to correct the position and movement of the forming film during the forming of the forming film. In addition, the tolerance detection indicator 820 may be formed on each of the modules of the forming apparatus 50 and used to correct the position and movement of the forming film.

First, one embodiment of the method of attaching the protective film according to the present invention by using the film detection indicator 810 will be described.

In a first step, the electronic device 910 may recognize a predetermined uniform resource locator (URL), a predetermined uniform resource name (URN), or a predetermined uniform resource identifier (URI) by placing an NFC tag 920 adjacent to the electronic device 910 or using a camera of the electronic device 910. In this case, the electronic device 910 may be a smartphone or a tablet PC. As described above, the protective film 60 of the present invention may be mainly used to be attached to the display 911 of the smartphone or the tablet PC. However, the present invention is not limited thereto, and the protective film 60 may be used for various electronic devices 910.

In this case, a letter recognized by the camera may be a letter indicating the uniform resource locator (URL), the uniform resource name (URN), or the uniform resource identifier (URI).

As illustrated in FIG. 2, the film detection indicator 810 is formed on the protective film 60. As illustrated in FIG. 3, when the NFC tag 920 is placed adjacent to the electronic device 910, the electronic device 910 recognizes information stored in the NFC tag 920. Therefore, URL information stored in the NFC tag 920 may be inputted to an Internet application of the electronic device 910. The NFC tag 920 may be enclosed in or attached to a package of a product package.

Further, the electronic device 910 may have the camera, and the URL (or URN or URI) may be written on the product package, the NFC tag 920, or the like. When the user recognizes the URL (or URN or URI) by using a camera application of the electronic device 910, the Internet application of the electronic device 910 may recognize URL (or URN or URI) information.

In a second step after the first step is performed, the electronic device 910 may access the URL (or URN or URI), and a matching image 830, which is an image matched with the film detection indicator 810 formed on the protective film 60 matched with the electronic device 910, may be displayed on the display 911 of the electronic device 910.

The user accesses the URL (or URN or URI) address automatically recognized and inputted as described above through the Internet application. The matching image 830 may be displayed on the display 911 after the user accesses the URL (or URN or URI) address as described above.

The matching image 830 may have a shape by inverting contrast of a shape of the film detection indicator 810. That is, the matching image 830 may be formed by converting the bright part into the dark part and converting the dark part into the bright part of the shape of the film detection indicator 810.

In a third step after the second step is performed, the protective film 60 may be attached to the position at which the film detection indicator 810 and the matching image 830 correspond to each other on the display 911. Specifically, the user may expose an adhesive layer on a lower surface of the intermediate liquid crystal protection film 61 by removing the adhesive surface protection film 63 formed on the lower portion of the intermediate liquid crystal protection film 61.

Next, the protective film 60 from which the adhesive surface protection film 63 is removed is positioned on an upper side of the display 911 so that the adhesive layer is directed toward the display 911. Further, the protective film 60 from which the adhesive surface protection film 63 is removed may be attached to the display 911 so that the bright part of the film detection indicator 810 and the dark part of the matching image 830 are matched with each other or the dark part of the film detection indicator 810 and the bright part of the matching image 830 are matched with each other. Thereafter, the hard coating surface protection film 62 on which the film detection indicator 810 is formed may be removed.

Hereinafter, another embodiment of the method of attaching the protective film according to the present invention by using the film detection indicator 810 will be described.

In a first step, the NFC tag 920 may be placed adjacent to the electronic device 910, and the electronic device may recognize information stored in the NFC tag 920. In this case, the information stored in the NFC tag 920 may be the matching image 830 which is the image matched with the film detection indicator 810 formed on the protective film 60 matched with the electronic device 910.

As illustrated in FIG. 2, the film detection indicator 810 is formed on the protective film 60. As illustrated in FIG. 3, when the NFC tag 920 may be placed adjacent to the electronic device 910, the electronic device 910 may recognize information stored in the NFC tag 920.

In a second step after the first step is performed, the matching image 830 may be displayed on the display 911 of the electronic device 910. The matching image 830 may have a shape by inverting contrast of a shape of the film detection indicator 810. That is, the matching image 830 may be formed by converting the bright part into the dark part and converting the dark part into the bright part of the shape of the film detection indicator 810.

In a third step after the second step is performed, the protective film 60 may be attached to the position at which the film detection indicator 810 and the matching image 830 correspond to each other on the display 911. Specifically, the user may expose an adhesive layer on a lower surface of the intermediate liquid crystal protection film 61 by removing the adhesive surface protection film 63 formed on the lower portion of the intermediate liquid crystal protection film 61.

Next, the protective film 60 from which the adhesive surface protection film 63 is removed is positioned on the upper side of the display 911 so that the adhesive layer is directed toward the display 911. Further, the protective film 60 from which the adhesive surface protection film 63 is removed may be attached to the display 911 so that the bright part of the film detection indicator 810 and the dark part of the matching image 830 are matched with each other or the dark part of the film detection indicator 810 and the bright part of the matching image 830 are matched with each other. Thereafter, the hard coating surface protection film 62 on which the film detection indicator 810 is formed may be removed.

Hereinafter, the forming apparatus 50 according to the present invention will be described. In this case, in addition to the configuration of the forming apparatus 50, the configuration will be described in which assembly deviations and process errors are corrected by improving positional precision of the protective film 60 during a manufacturing process by correcting the position and movement of the forming film by using the film detection indicator 810 or the tolerance detection indicator 820.

First, a structure of the forming apparatus 50 will be described.

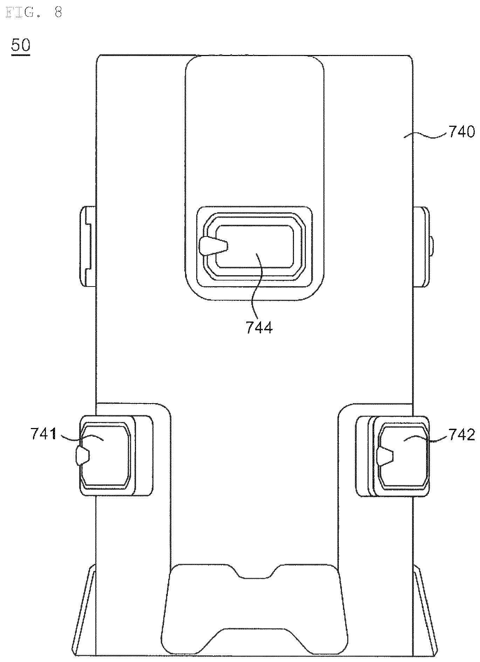

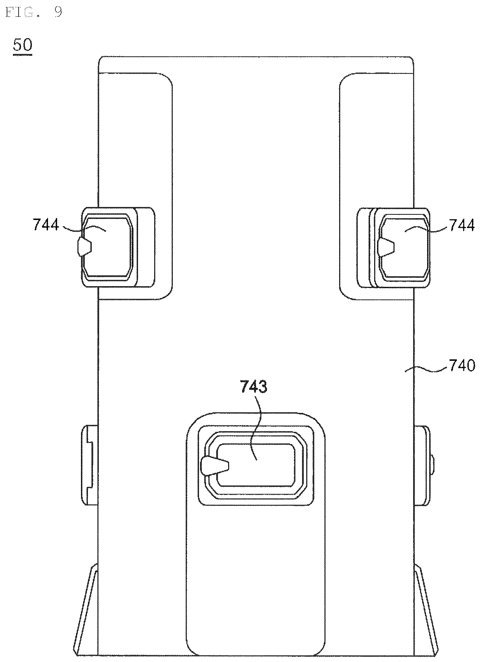

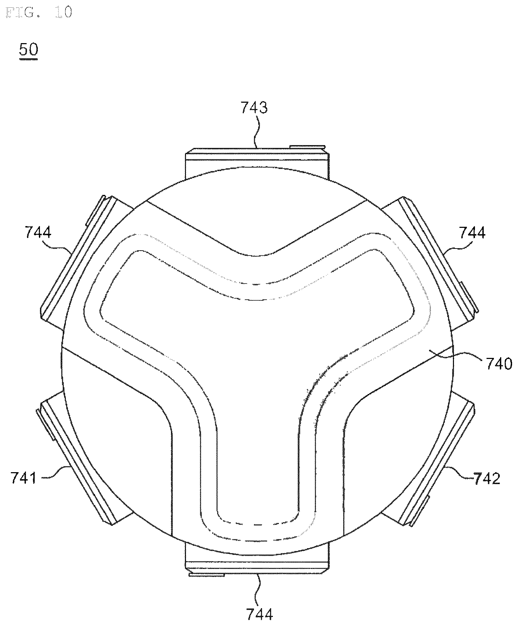

FIG. 8 is a front view of the forming apparatus 50 according to the embodiment of the present invention, FIG. 9 is a rear view of the forming apparatus 50 according to the embodiment of the present invention, and FIG. 10 is a top plan view of the forming apparatus 50 according to the embodiment of the present invention.

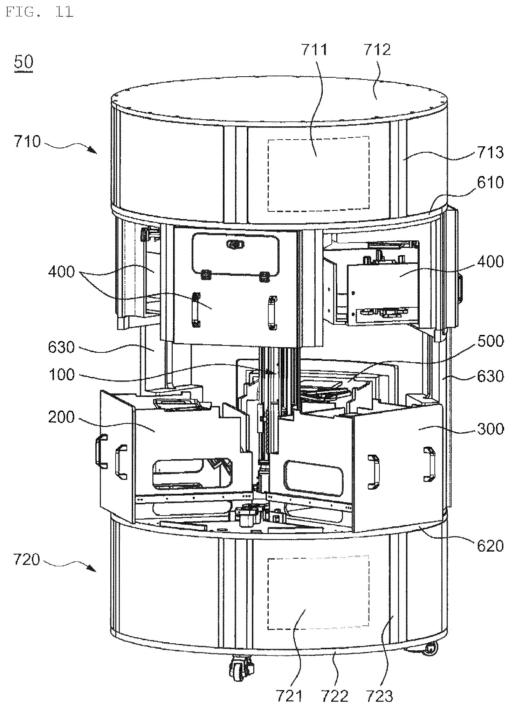

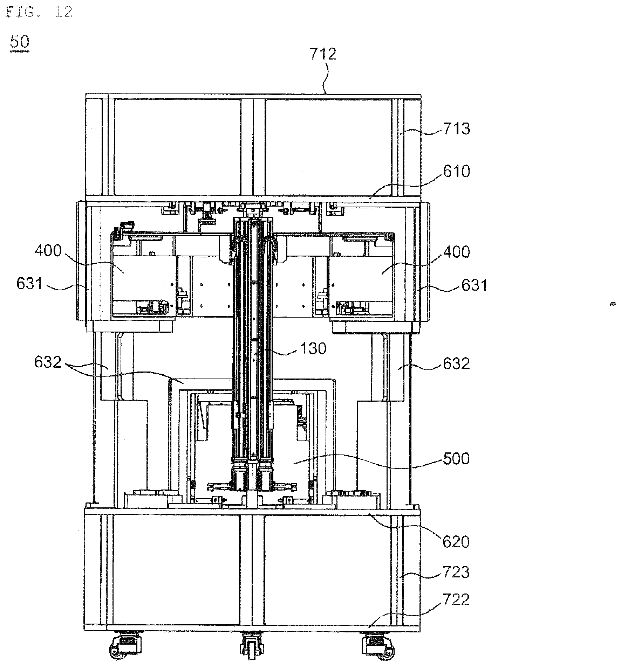

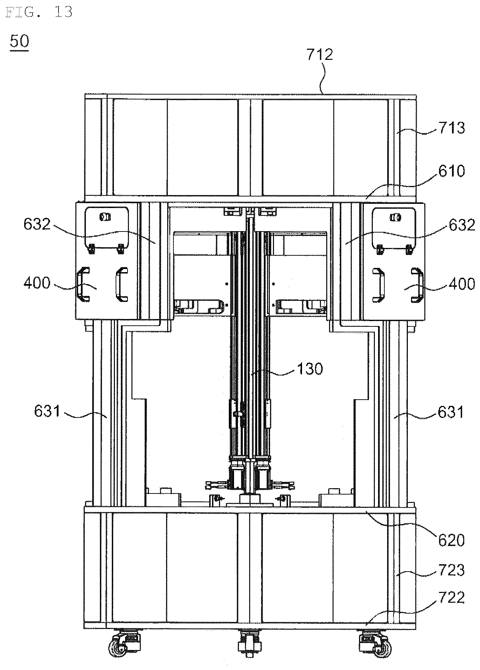

Further, FIG. 11 is an interior perspective view of the forming apparatus 50 according to the embodiment of the present invention, FIG. 12 is an interior front view of the forming apparatus 50 according to the embodiment of the present invention, and FIG. 13 is a rear view of the forming apparatus 50 according to the embodiment of the present invention.

In the drawings, a direction of an upper plate 610 is an upward direction, a direction of a lower plate 620 is a downward direction, an upward/downward direction is a vertical direction, and a direction perpendicular to the vertical direction is a horizontal direction. The same applies to the following description.

As illustrated in FIGS. 8 to 13, the forming apparatus 50 may include: a frame; a plurality of modules coupled to the frame and performing the forming process on the protective film 60; a transfer unit 100 disposed in the frame and picking up the protective film 60 in the frame and moving the protective film 60; an image capturing unit coupled to the transfer unit 100 and creating a captured image by capturing an image of the tolerance detection indicator 820 or the film detection indicator 810; and a control unit 721 deriving a three-dimensional position change value of the protective film 60 or any one of a plurality of components installed in the plurality of modules by analyzing the captured image transmitted from the image capturing unit.

The frame may include the upper plate 610 and the lower plate 620 and include a plurality of frame support units 630 coupled to the upper plate 610 and the lower plate 620. Further, the plurality of modules may include: a loading module 200 coupled to a lower portion of the frame and accommodating the protective film 60 transferred from the outside and then allow the transfer unit 100 to pick up the protective film 60; an alignment module 300 coupled to the lower portion of the frame and receiving the protective film 60 picked up in the loading module 200, the alignment module 300 providing a space in which the protective films 60 are stacked and aligned by the transfer unit 100; forming modules 400 coupled to an upper portion of the frame and receiving the protective film 60 picked up in the alignment module 300 and perform the forming process on the protective film 60; and an unloading module 500 coupled to the lower portion of the frame and receiving and accommodate the protective film 60 picked up after the forming process is performed on the protective film 60 in the forming module 400. Further, one or more forming modules 400 may be provided.

The upper and lower plates 610 and 620 may each have a circular plate shape. The plurality of frame support units 630 may be provided on the upper plate 610 and the lower plate 620, thereby providing an internal space in which the components are installed in the frame.

An upper module 710 having a space therein may be coupled to an upper end of the frame. A lower module 720 having therein a space and mounting the frame while supporting the frame may be coupled to a lower end of the frame. A power source unit 711 may be provided in the upper module 710 and supply power to the components for operating the transfer unit 100, the loading module 200, the alignment module 300, the forming module 400, and the unloading module 500. Further, the control unit 721 may be provided in the lower module 720 and performing control by transmitting control signals to the components for operating the transfer unit 100, the loading module 200, the alignment module 300, the forming module 400, and the unloading module 500.

A casing 740 may be provided to surround an outer side of a coupled body made by coupling the frame, the upper module 710, and the lower module 720 in order to protect the coupled body made by coupling the frame, the upper module 710, and the lower module 720. According to the apparatus according to the present invention described above, the processes of loading, aligning, forming, and unloading the protective film 60 may be performed in the single apparatus having the single casing 740 in which the components are installed. Therefore, it is possible to maximize efficiency in producing the protective film 60.

The frame support unit 630 may include: a main support body 631 provided in the form of a T-shaped bar made by coupling a horizontal bar and a vertical bar; and an auxiliary support body 632 provided in the form of a rectilinear bar coupled to two opposite horizontal ends of the T-shaped bar in a direction parallel to the vertical bar. In this case, among the frame support units 630, the frame support unit 630, which is coupled to the upper plate 610 so that the auxiliary support body 632 is directed toward the upper portion of the frame, may be referred to as a first frame support unit, and the frame support unit 630, which is coupled to the lower plate 620 so that the auxiliary support body 632 is directed toward the lower portion of the frame, may be referred to as a second frame support unit.

The frame support unit 630 may fix any one selected from the loading module 200, the alignment module 300, the forming module 400, and the unloading module 500. Specifically, the auxiliary support body 632 of the first frame support unit may be coupled to the upper plate 610, the main support body 631 may be coupled to the lower plate 620, and the first frame support unit may be coupled to the forming module 400 installed on the upper portion of the frame. In this case, the two opposite portions of the forming module 400 may be supported by the auxiliary support body 632 of the first frame support unit, and the lower portion of the forming module 400 may be supported by the horizontal bar of the main support body 631.

Further, the auxiliary support body 632 of the second frame support unit may be coupled to the lower plate 620, the main support body 631 may be coupled to the upper plate 610, and the second frame support unit may be coupled to the loading module 200 installed on the lower portion of the frame. In this case, the two opposite portions of the loading module 200 may be supported by the auxiliary support body 632 of the second frame support unit, and the upper portion of the loading module 200 may be supported by the horizontal bar of the main support body 631. The second frame support unit may be coupled to the alignment module 300 and the unloading module 500 in the same manner.

As described above, since the modules are respectively supported by the frame support units 630, the modules may be installed on the single frame. Therefore, the plurality of modules may be disposed in the minimum space, thereby improving installation space efficiency.

The plurality of forming modules 400 may be radially disposed at equal intervals in a circumferential direction of the upper plate 610 having a circular plate shape. In addition, the loading module 200, the alignment module 300, and the unloading module 500 may be radially disposed at equal intervals in a circumferential direction of the lower plate 620. Further, based on the circumferential direction of the frame, the forming modules 400 may be disposed between the loading module 200, the alignment module 300, and the unloading module 500.

Specifically, when viewed from door positions in FIGS. 8 to 10, i.e., when viewed from above the apparatus according to the present invention, the loading module 200, the alignment module 300, and the unloading module 500 may be disposed between the forming modules 400. As described above, the plurality of forming modules 400 provided on the upper portion of the frame are alternately disposed together with the loading module 200, the alignment module 300, and the unloading module 500, such that the protective film 60 may be easily transferred by a loading arm unit 110 and an unloading arm unit 120, which will be described below, without hindrance.

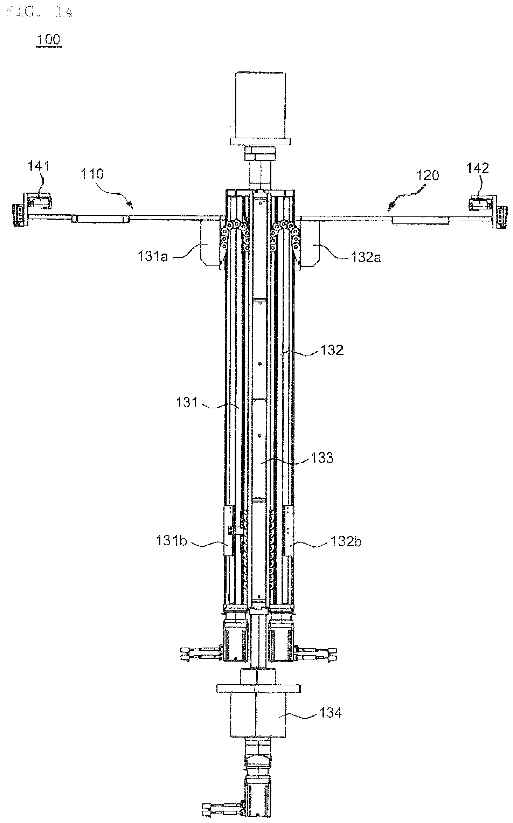

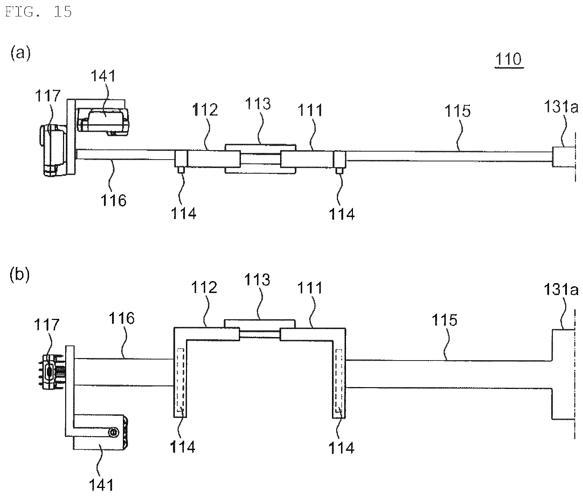

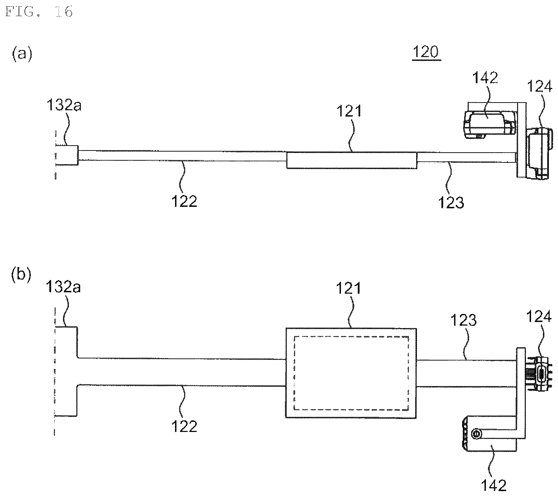

FIG. 14 is a front view of the transfer unit according to the embodiment of the present invention, FIG. 15 is a front view and a top plan view of a loading arm unit according to the embodiment of the present invention, and FIG. 16 is a front view and a top plan view of an unloading arm unit according to the embodiment of the present invention. In this case, FIG. 15A is a front view of the loading arm unit 110, FIG. 15B is a top plan view of the loading arm unit 110, FIG. 16A is a front view of the unloading arm unit 120, and FIG. 16B is a top plan view of the unloading arm unit 120.

The transfer unit 100 may include a robot arm configured to pick up and move the pre-formed protective film 60 or the post-formed protective film 60. In this case, the structure of the robot arm may include the loading arm unit 110, the unloading arm unit 120, and an arm driver 130, which will be described below.

Specifically, as illustrated in FIGS. 14 to 16, the transfer unit 100 may include: the loading arm unit 110 configured to pick up the protective film 60 and align the protective films 60 stacked in the alignment module 300; the unloading arm unit 120 configured to pick up the protective film 60 formed in the forming module 400; and the arm driver 130 configured to move or rotate the loading arm unit 110 upward or downward and move or rotate the unloading arm unit 120 upward or downward. In this case, an upper end of the arm driver 130 may be coupled to the upper plate 610, and a lower end of the arm driver 130 may be coupled to the lower plate 620.

The arm driver 130 may include: a loading motor 131 which is a linear motor coupled to the loading arm unit 110 and configured to move the loading arm unit 110 upward or downward; an unloading motor 132 which is a linear motor coupled to the unloading arm unit 120 and configured to move the unloading arm unit 120; an arm driving support part 133 disposed in the frame, extending in a vertical direction, and configured to fix and support the loading motor 131 and the unloading motor 132; and an arm driving rotation motor 134 coupled to a lower end of the arm driving support part 133 and configured to rotate the arm driving support part 133.

The loading motor 131 may include a loading transfer body 131a configured to move in the upward/downward direction. The unloading motor 132 may include an unloading transfer body 132a configured to move in the upward/downward direction. Further, the loading arm unit 110 may be coupled to the loading transfer body 131a and move. The unloading arm unit 120 may be coupled to the unloading transfer body 132a and move.

In this case, the loading transfer body 131a and the unloading transfer body 132a may provide magnetic force. A loading transfer brake 131b may be provided at a lower side of the loading motor 131 and restrict a downward movement of the loading transfer body 131a by using the magnetic force. An unloading transfer brake 132b may be provided at a lower side of the unloading motor 132 and restrict a downward movement of the unloading transfer body 132a by using the magnetic force. Therefore, it is possible to prevent the transfer unit 100 from being damaged by a rapid downward movement of the loading transfer body 131a or the unloading transfer body 132a.

The loading arm unit 110 may include a pick-up alignment unit configured to align the protective film 60 by adjusting a distance between two opposite planar surfaces that come into contact with lateral portions of the protective film 60. The pick-up alignment unit picks up the protective film 60 by sucking the protective film 60 by using a vacuum. In addition, the loading arm unit 110 may include: an outer loading arm 116 coupled to one side of the pick-up alignment unit; and an inner loading arm 115 coupled to the loading motor 131 and the other side of the pick-up alignment unit.

The pick-up alignment unit may include: an outer alignment bar 112 provided in the form of a bar having a '¬' shape and a rectangular vertical cross-section; an inner alignment bar 111 provided in the form of a bar having a '¬' shape and a rectangular vertical cross-section and provided at a position facing the outer alignment bar 112; and an interval adjuster 113 coupled to the outer alignment bar 112 and the inner alignment bar 111 and having a length that varies to adjust an interval between the outer alignment bar 112 and the inner alignment bar 111. In this case, one end of the outer loading arm 116 may be coupled to the outer alignment bar 112, one end of the inner loading arm 115 may be coupled to the inner alignment bar 111, and the other end of the inner loading arm 115 may be coupled to the loading motor 131.

Further, the pick-up alignment unit may include a loading pick-up device 114 provided on a lower surface of the inner alignment bar 111 or the outer alignment bar 112 and configured to pick up the protective film 60 by sucking the protective film 60 by using a vacuum. When the outer alignment bar 112 and the inner alignment bar 111 spaced apart from each other at a predetermined interval approach the protective film 60, the interval between the outer alignment bar 112 and the inner alignment bar 111 may decrease, and the outer alignment bar 112 and the inner alignment bar 111 may press the lateral portions of the protective film 60 while coming into contact with the lateral portions of the protective film 60, thereby aligning the protective film 60. Further, the aligned protective film 60 may be picked up by the loading pick-up device 114 and then moved as the inner loading arm 115 moves. This configuration will be described below in detail.

The unloading arm unit 120 may include an unloading pick-up device 121 configured to pick up the protective film 60 by sucking the protective film 60 by using a vacuum. In addition, the unloading arm unit 120 may include: an outer unloading arm 123 coupled to one side of the unloading pick-up device 121; and an inner unloading arm 122 coupled to the unloading motor 132 and the other side of the unloading pick-up device 121. In this case, one end of the outer unloading arm 123 may be coupled to one side of the unloading pick-up device 121, one end of the inner unloading arm 122 may be coupled to the other side of the unloading pick-up device 121, and the other end of the inner unloading arm 122 may be coupled to the unloading motor 132. The unloading arm unit 120 may move such that the unloading pick-up device 121 picks up the protective film 60 formed in the forming module 400 and then moves the protective film 60 to the unloading module 500. This configuration will be described below in detail.

The loading arm unit 110 and the unloading arm unit 120 may each have a displacement sensor. Specifically, a loading displacement sensor 117, which is the displacement sensor, may be provided at the other end of the outer loading arm 116, and an unloading displacement sensor 124, which is the displacement sensor, may be provided at the other end of the outer unloading arm 123. When the loading displacement sensor 117 transmits a signal to the control unit 721, the control unit 721 may determine positions of the components provided in the loading arm unit 110. When the unloading displacement sensor 124 transmits a signal to the control unit 721, the control unit 721 may determine positions of the components provided in the unloading arm unit 120. Therefore, the loading arm unit 110 may automatically pick up, align, and move the protective film 60. In addition, the unloading arm unit 120 may automatically pick up and move the protective film 60. Therefore, the processes may be automatically performed on the protective film 60, and the process of forming and manufacturing the protective film 60 may be continuously performed.

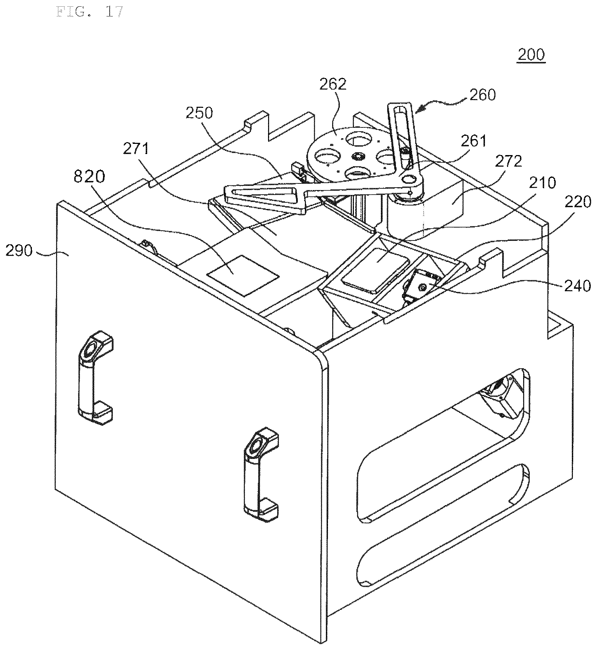

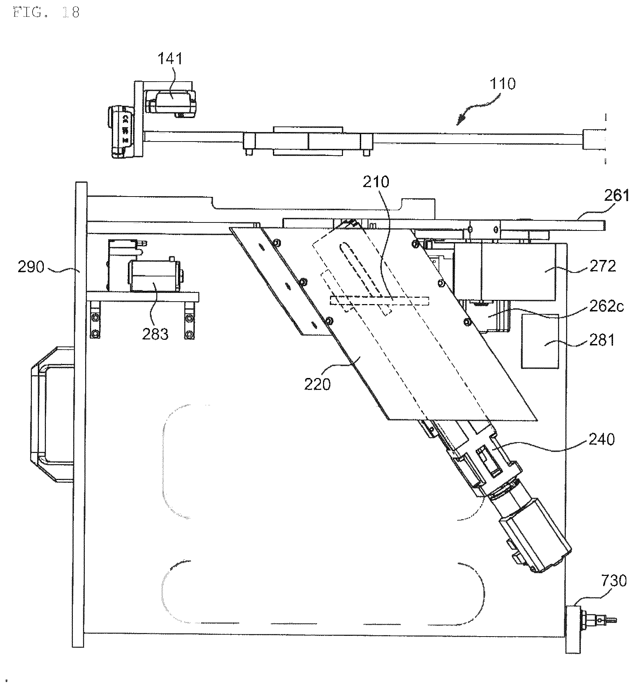

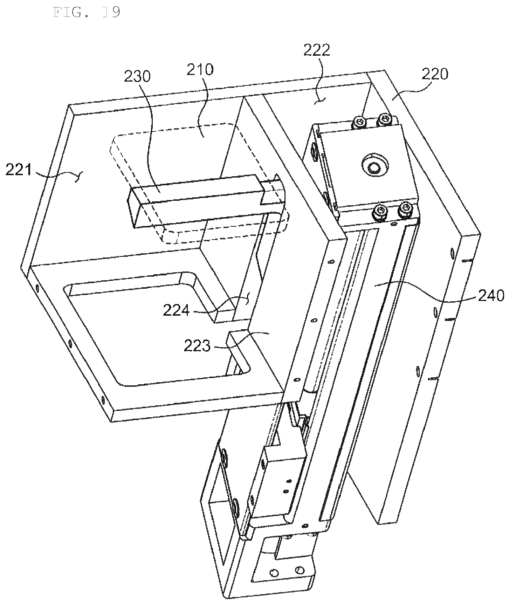

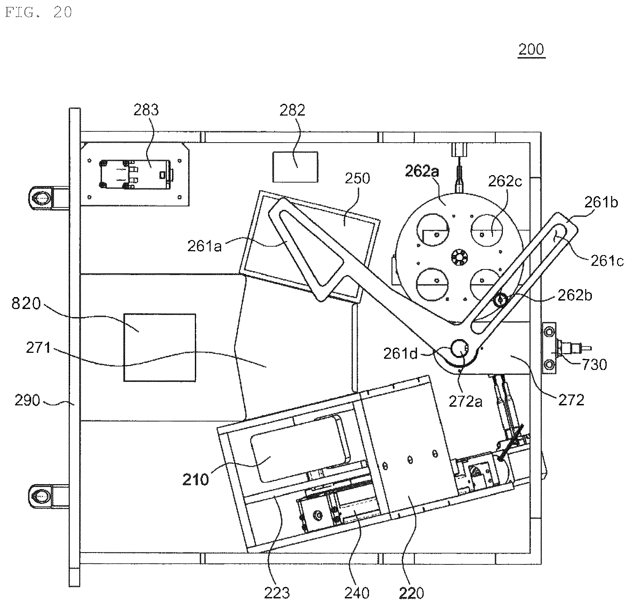

FIG. 17 is a perspective view of the loading module 200 according to the embodiment of the present invention, FIG. 18 is an interior side view of the loading module 200 according to the embodiment of the present invention, and FIG. 19 is an enlarged view of a part of the loading module 200 according to the embodiment of the present invention. Further, FIG. 20 is an interior top plan view of the loading module 200 according to the embodiment of the present invention.

As illustrated in FIGS. 17 to 20, the loading module 200 may include: a loading cartridge 220 having a loading accommodation space 221 which is a space configured to accommodate the protective film 60; a loading film transfer body 210 positioned in the loading accommodation space 221 and configured to seat the protective film 60 transferred from the outside and then rectilinearly move; and a loading driver 240 coupled to the loading film transfer body 210 and configured to move the loading film transfer body 210 by changing a length thereof.

Further, the loading module 200 may further include a loading housing 290 which is a housing having an internal space, and the loading cartridge 220 may be provided in the internal space of the loading housing 290. In this case, the loading driver 240 may be a linear motor.

The loading cartridge 220 may further include a loading driver space 222 provided adjacent to the loading accommodation space 221 and configured such that a part of the loading driver 240 is inserted into the loading driver space 222. The loading cartridge 220 may further include a loading cartridge separation wall body 223 in order to separate the loading accommodation space 221 and the loading driver space 222.

Further, the loading cartridge separation wall body 223 may have a loading cartridge separation wall body hole 224 which is a hole formed in a movement direction of the loading film transfer body 210. In addition, the loading module 200 may further include a loading film transfer support body 230 configured to penetrate the loading cartridge separation wall body hole 224 and having one end coupled to the loading driver 240 and the other end coupled to the loading film transfer body 210. The loading driver 240 rectilinearly moves the loading film transfer support body 230 along the loading cartridge separation wall body hole 224. Therefore, the loading film transfer body 210 may rectilinearly move. In this case, an extension direction of the loading cartridge separation wall body hole 224 may be a direction diagonal to the vertical direction. Therefore, the loading film transfer body 210 may reciprocate in the direction diagonal to the vertical direction.

The loading module 200 may further include: a loading pad 250 configured to seat the protective film 60 transmitted from the loading film transfer body 210 and deliver the protective film 60 to the transfer unit 100; and a loading delivery unit 260 configured to deliver the protective film 60 positioned on the loading film transfer body 210 to the loading pad 250. In this case, the loading pad 250 is a pad configured to suck the protective film 60 by using a vacuum. The protective film 60 moved onto a surface of the loading pad 250 may be fixed to the loading pad 250 by being sucked by a vacuum. In addition, the loading pad 250 and the loading delivery unit 260 may be installed in the internal space of the loading housing 290.

Further, the loading delivery unit 260 may include: a film feeder 261 configured to move the protective film 60 positioned on the loading film transfer body 210 to the loading pad 250 by sliding the protective film 60; and a feeder driver 262 coupled to the film feeder 261 and configured to move the film feeder 261. In addition, the loading module 200 may further include: a sliding support body 271 provided between the loading cartridge 220 and the loading pad 250 and configured to provide a sliding surface on which the protective film 60 slides from the loading cartridge 220 to the loading pad 250; and a film feeder support body 272 coupled to an inner surface of the loading housing 290 and configured to support the film feeder 261.

The film feeder 261 may include: a pressing feeder body 261a configured to push the protective film 60 positioned on the loading film transfer body 210 by rotating so that the protective film 60 passes through the sliding support body 271 and then moves to the loading pad 250; and a feeder driving body 261b having one portion coupled to the pressing feeder body 261a and the other portion coupled to the feeder driver 262 and configured to rotate. In this case, the pressing feeder body 261a and the feeder driving body 261b may be coupled so that the film feeder 261 has a '¬' shape.

A rotation hole 261d, which is a hole penetrated by a rotation center axis of the film feeder 261, may be formed in a portion where the pressing feeder body 261a and the feeder driving body 261b are coupled. A film feeder support pin 272a, which is a pin protruding from an upper surface of the film feeder support body 272, may penetrate the rotation hole 261d. Further, the film feeder 261 may have a feeder driving hole 261c which is a hole formed in a longitudinal direction of the feeder driving body 261b.

The feeder driver 262 may include: a feeder rotating body 262a configured to rotate and having a feeder protrusion 262b protruding from an upper surface thereof; and a feeder rotary motor 262c coupled to the feeder rotating body 262a and configured to transmit rotation driving power to the feeder rotating body 262a. Further, the feeder protrusion 262b may be coupled to the feeder driving hole 261c. As the feeder protrusion 262b is moved along the feeder driving hole 261c by a clockwise or counterclockwise rotation of the feeder rotating body 262a, the feeder driving body 261b may be rotated, such that the pressing feeder body 261a may be rotated, and as a result, the film feeder 261 may be rotated.

The film feeder 261 may be on standby at a position deviating from an upper portion of the loading cartridge 220. When the user seats the plurality of pre-formed protective films 60 on the loading film transfer body 210, the pressing feeder body 261a may be moved to an upper portion of the loading driver 240 by the rotation of the film feeder 261, such that the loading driver 240 may operate, and the loading film transfer body 210 may move toward the upper portion of the loading cartridge 220.

In this case, the loading film transfer body 210 may move to a degree to which one protective film 60 protrudes from an upper end of the loading cartridge 220. In this case, the film feeder 261 may push the corresponding protective film 60 while skimming over the upper end of the loading cartridge 220. The protective film 60 pushed by the pressing feeder body 261a may move from the upper end of the loading cartridge 220 to the sliding support body 271 and then move back to the loading pad 250 from the sliding support body 271.

The loading module 200 may further include: a loading ionizer 281 which is an ionizer configured to prevent occurrence of static electricity between the protective films 60 by preventing static electricity in the loading housing 290 so that one protective film 60 is easily separated from another protective film 60 when the protective film 60 is moved by the film feeder 261; a loading pad pressure sensor 282 which is a sensor connected to the loading pad 250 and configured to measure a vacuum pressure of the loading pad 250; and a loading vacuum pump 283 connected to the loading pad 250 and configured to provide the vacuum pressure to the loading pad 250.

The loading pad pressure sensor 282 transmits information on the vacuum pressure of the loading pad 250 to the control unit 721, and the control unit 721 may transmit a control signal to the loading vacuum pump 283 and control the loading vacuum pump 283 so that the vacuum pressure of the loading pad 250 is kept within a predetermined range.

With this configuration, the loading module 200 may accommodate the plurality of protective films 60 in the loading cartridge 220 and automatically move the protective films 60, one by one, to the loading pad 250, such that the protective films 60 to be subjected to the forming process may be individually and automatically supplied, thereby improving efficiency in automatically processing the protective film 60.

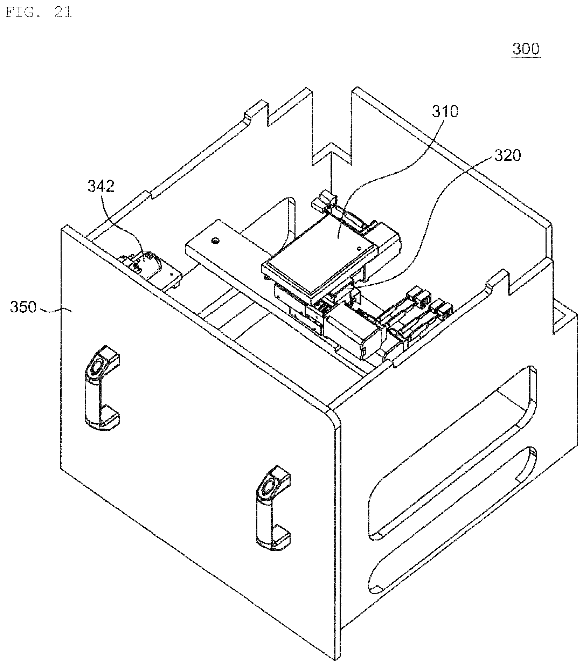

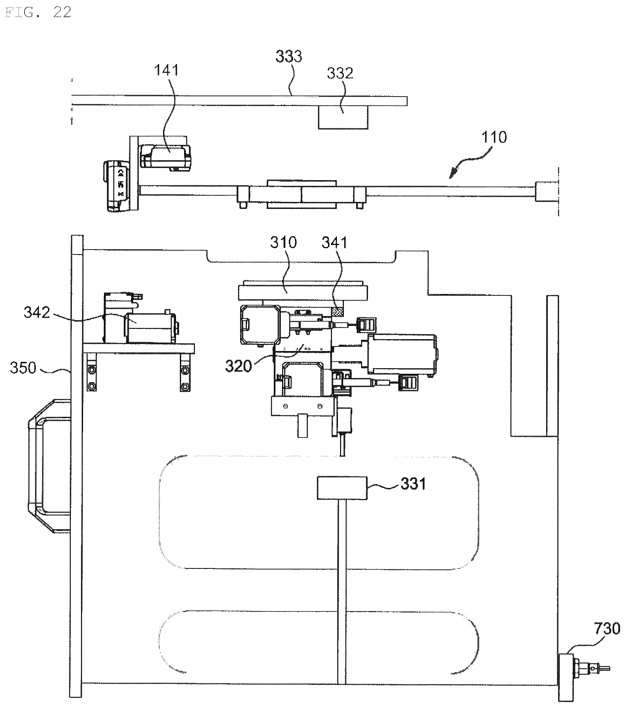

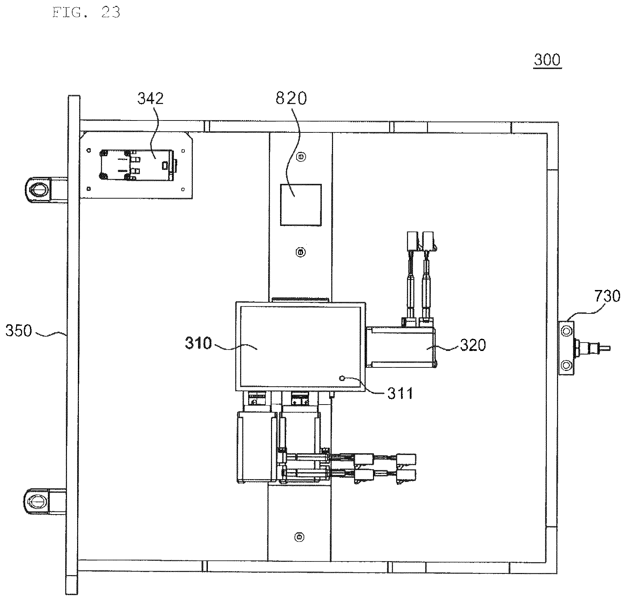

FIG. 21 is a perspective view of the alignment module 300 according to the embodiment of the present invention, FIG. 22 is an interior side view of the alignment module 300 according to the embodiment of the present invention, and FIG. 23 is an interior top plan view of the alignment module 300 according to the embodiment of the present invention.

As illustrated in FIGS. 21 to 23, the alignment module 300 may include: an alignment pad 310 configured to seat the protective film 60 transferred from the loading module 200 and then support the protective film 60 when the transfer unit 100 aligns the protective film 60; and an alignment driver 320 coupled to a lower portion of the alignment pad 310 and configured to move the alignment pad 310. Further, the alignment module 300 may further include an alignment housing 350 which is a housing having an internal space, and the alignment pad 310 and the alignment driver 320 may be provided in the internal space of the alignment housing 350. In this case, an upper area of the alignment pad 310 may be smaller than an area of the protective film 60.

The alignment pad 310 may perform a three-dimensional motion by the operation of the alignment driver 320. The operation of the alignment driver 320 may be performed in conjunction with the movement of the pick-up alignment unit of the transfer unit 100. Specifically, the protective film 60 picked up from the loading pad 250 by the loading pick-up device 114 of the pick-up alignment unit may be seated on the alignment pad 310 as the pick-up alignment unit moves.

In this case, the three-dimensional motion of the alignment pad 310 may be performed so that the protective film 60 released, i.e., separated from the pick-up alignment unit is seated at an accurate position on the alignment pad 310. The above-mentioned operation may be automatically performed by a program embedded in the control unit 721.

Further, when the protective film 60 is seated on the alignment pad 310, an interval between the outer alignment bar 112 αnd the inner alignment bar 111 may be increased by the operation of the interval adjuster 113 of the pick-up alignment unit, and the alignment pad 310 may move upward so that the protective film 60 is positioned between the outer alignment bar 112 and the inner alignment bar 111. In this case, the three-dimensional motion of the alignment pad 310 may of course be performed so that the alignment pad 310 is positioned at the accurate position.

When the protective film 60 is positioned between the outer alignment bar 112 and the inner alignment bar 111 by the movement of the alignment pad 310, an interval between the outer alignment bar 112 and the inner alignment bar 111 of the pick-up alignment unit may be decreased, and the protective film 60 comes into contact with the outer alignment bar 112 and the inner alignment bar 111, such that the protective film 60 may be aligned.

The alignment pad 310 may have a laser through-hole 311 penetrated by a laser beam passing through the protective film 60. Further, the alignment module 300 may further include: a light-emitting part 331 disposed below the alignment pad 310 and configured to emit the laser beam toward the laser through-hole 311; and a light-receiving part 332 disposed above the alignment pad 310 and configured to receive the laser beam having passed through the laser through-hole 311. Further, the light-receiving part 332 may transmit information on the receiving of the laser beam to the control unit 721.

In this case, the light-receiving part 332 may be supported by a light-receiving part support 333 coupled to the frame support unit 630. The loading arm unit 110 may move while preventing a collision with the light-receiving part 332 and the light-receiving part support 333. In addition, when the light-emitting part 331 emits the laser beam, the loading arm unit 110 may automatically move to a position at which the loading arm unit 110 does not interfere with an emission route of the laser beam.

The laser beam emitted from the light-emitting part 331 may penetrate the laser hole, pass through the protective film 60 seated on the alignment pad 310, and be received by the light-receiving part 332. Further, it is possible to determine whether two or more protective films 60 are seated on the alignment pad 310 by measuring a refraction angle of the laser beam passing through the protective film 60.

Specifically, a refraction angle of the laser beam measured by the light-receiving part 332 when one protective film 60 is seated on the alignment pad 310 and then the laser beam passes through the one protective film 60 is different from a refraction angle of the laser beam measured by the light-receiving part 332 when two protective films 60 are seated on the alignment pad 310 and then the laser beam passes through the two protective films 60. Therefore, it is possible to determine whether one protective film 60 is seated on the alignment pad 310 by using the above-mentioned difference between the refraction angles.

When a refraction angle of the laser beam measured by the light-receiving part 332 is different from a reference refraction angle value which is a refraction angle value of the laser beam, which is measured when the laser beam passes through the single protective film 60 and stored in advance in the control unit 721, the control unit 721 may determine that two or more protective films 60 are seated on the alignment pad 310, and then the control unit 721 may transmit a control signal to a warning lamp, an alarm sound generator, and the like. Therefore, the user may recognize that there occurs abnormality in response to the process of seating the protective film 60 on the alignment pad 310. Further, in this case, the apparatus according to the present invention may be temporarily stopped.

The alignment module 300 may further include: an alignment pad pressure sensor 341 which is a sensor connected to the alignment pad 310 and configured to measure a vacuum pressure of the alignment pad 310; and an alignment vacuum pump 342 connected to the alignment pad 310 and configured to provide the vacuum pressure to the alignment pad 310. The alignment pad pressure sensor 341 transmits information on the vacuum pressure of the alignment pad 310 to the control unit 721, and the control unit 721 may transmit a control signal to the alignment vacuum pump 342 and control the alignment vacuum pump 342 so that the vacuum pressure of the alignment pad 310 is kept within a predetermined range.

With this configuration, it is possible to check whether the protective film 60 is aligned by the alignment module 300 and whether one protective film 60 is positioned on the alignment pad 310. Therefore, the one protective film 60 aligned as described above may be seated on a mold 410 of the forming module 400. Therefore, the protective film 60 may be seated at the accurate position on the mold 410, and a forming error of the protective film 60 may be minimized, thereby improving quality of the formed protective film 60.

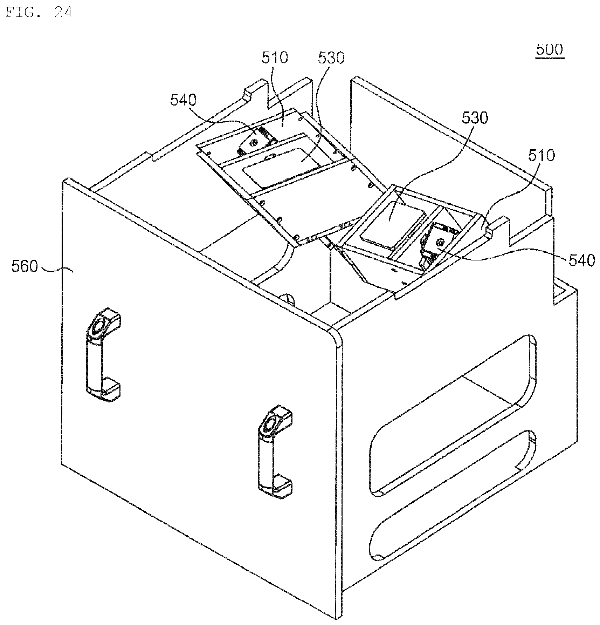

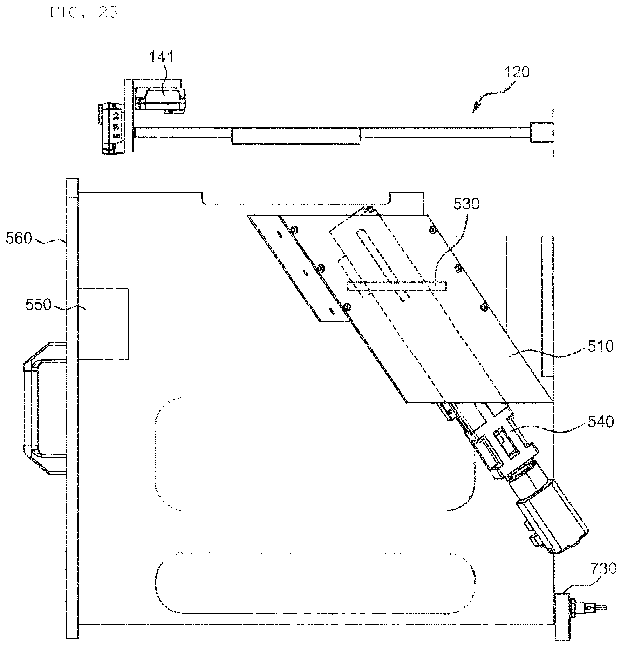

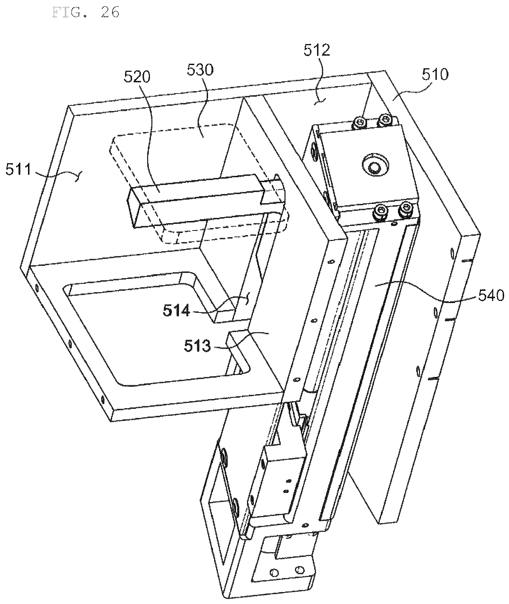

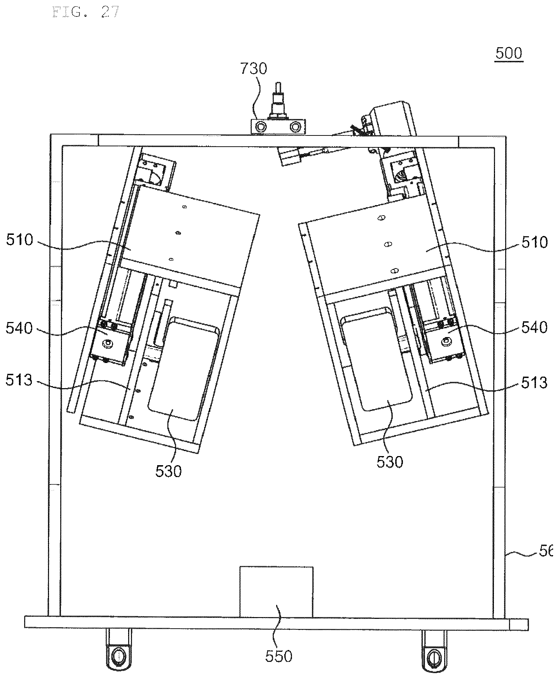

FIG. 24 is a perspective view of the unloading module 500 according to the embodiment of the present invention, FIG. 25 is an interior side view of the unloading module 500 according to the embodiment of the present invention, and FIG. 26 is an enlarged view of a part of the unloading module 500 according to the embodiment of the present invention. Further, FIG. 27 is an interior top plan view of the unloading module 500 according to the embodiment of the present invention.

As illustrated in FIGS. 24 to 27, the unloading module 500 may include: an unloading cartridge 510 having an unloading accommodation space 511 which is a space configured to accommodate the protective film 60; an unloading film transfer body 530 positioned in the unloading accommodation space 511 and configured to seat the protective film 60 transferred from the forming module 400 and then rectilinearly move; and an unloading driver 540 coupled to the unloading film transfer body 530 and configured to move the unloading film transfer body 530 by changing a length thereof. In this case, a coupled body made by coupling the unloading cartridge 510, the unloading film transfer body 530, and the unloading driver 540 may be referred to as an unloading unit.

Further, the unloading module 500 may further include an unloading housing 560 which is a housing having an internal space, and the unloading cartridge 510 may be provided in the internal space of the unloading housing 560. In this case, the unloading driver 540 may be a linear motor.

As illustrated in FIGS. 24 to 27, two or more unloading units may be provided. However, the configuration in which the single unloading unit is provided will be described below.

The unloading cartridge 510 may further include an unloading driver space 512 provided adjacent to the unloading accommodation space 511 and configured such that a part of the unloading driver 540 is inserted into the unloading driver space 512. The unloading cartridge 510 may further include an unloading cartridge separation wall body 513 in order to separate the unloading accommodation space 511 and the unloading driver space 512.

Further, the unloading cartridge separation wall body 513 may have an unloading cartridge separation wall body hole 514 which is a hole formed in a movement direction of the unloading film transfer body 530. In addition, the unloading module 500 may further include an unloading film transfer support body 520 configured to penetrate the unloading cartridge separation wall body hole 514 and having one end coupled to the unloading driver 540 and the other end coupled to the unloading film transfer body 530. The unloading driver 540 rectilinearly moves the unloading film transfer support body 520 along the unloading cartridge separation wall body hole 514. Therefore, the unloading film transfer body 530 may rectilinearly move. In this case, an extension direction of the unloading cartridge separation wall body hole 514 may be a direction diagonal to the vertical direction. Therefore, the unloading film transfer body 530 may reciprocate in the direction diagonal to the vertical direction.

When the unloading pick-up device 121 of the unloading arm unit 120 picks up the protective film 60 formed in the forming module 400, moves the protective film 60, and then seats the protective film 60 on the unloading film transfer body 530, the unloading film transfer support body 520 is moved away from the upper end of the unloading cartridge 510 by the operation of the unloading driver 540, and the unloading film transfer body 530 is also moved away from the upper end of the unloading cartridge, such that the protective film 60 stacked on the unloading film transfer body 530 may be introduced into the unloading accommodation space 511.

The unloading module 500 may further include an unloading ionizer 550 which is an ionizer configured to prevent occurrence of static electricity between the protective films 60 by preventing static electricity in the unloading housing 560 so that the protective films 60 are easily separated from the stack of the protective films 60 unloaded to the outside.

With this configuration, the unloading module 500 may stably accommodate and store the plurality of protective films 60 in the unloading cartridge 510, such that the formed protective films 60 may be automatically organized. Therefore, it is possible to improve efficiency in automatically processing the protective film 60.

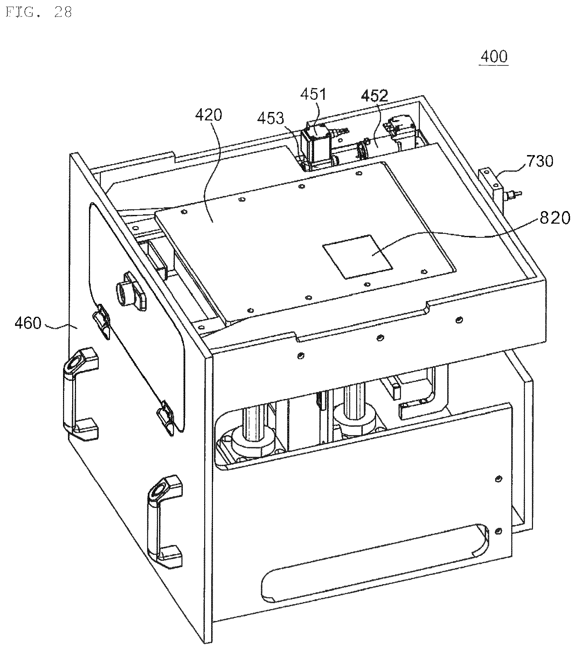

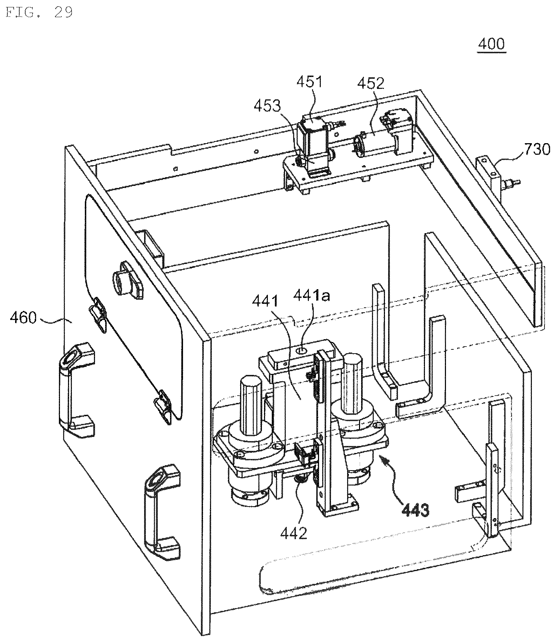

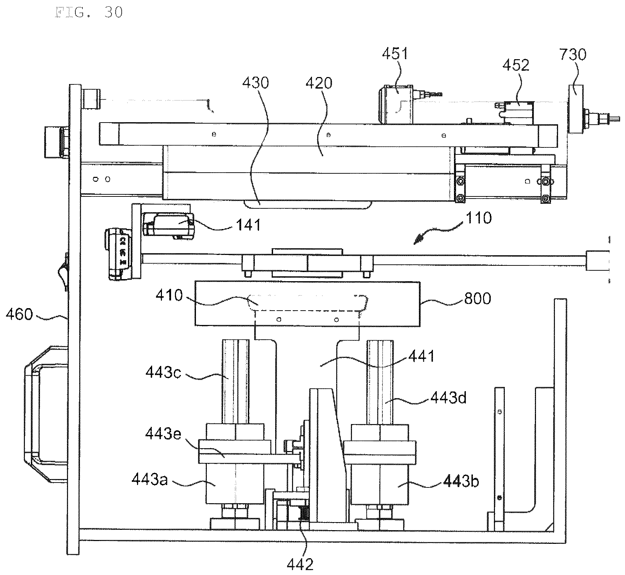

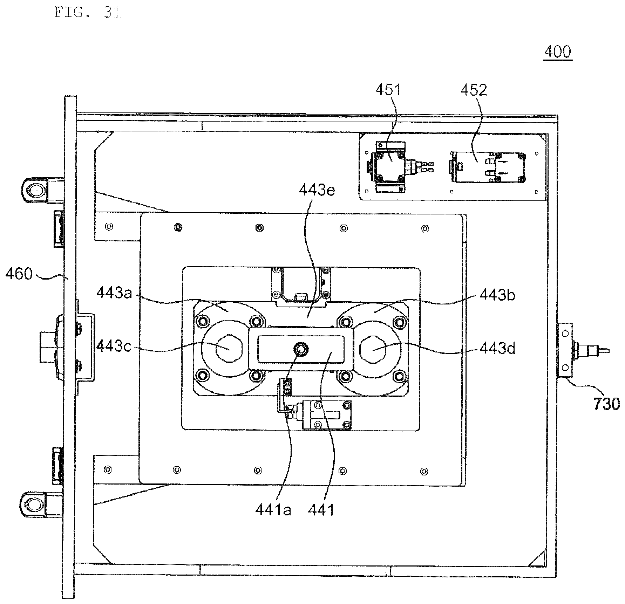

FIGS. 28 and 29 are perspective views of the forming module 400 according to the embodiment of the present invention. In this case, FIG. 28 is a perspective view of the forming module 400 in a state in which a press head 420 is installed, and FIG. 29 is a perspective view of the forming module 400 in a state in which the press head 420 is separated. Further, FIG. 30 is an interior side view of the forming module 400 according to the embodiment of the present invention, and FIG. 31 is an interior top plan view of the forming module 400 according to the embodiment of the present invention.

As illustrated in FIGS. 28 to 31, the forming module 400 may include: the mold 410 configured to form the protective film 60; the press head 420 positioned corresponding to the mold 410 and configured to change a distance from the mold 410; and a variable volume body 430 coupled to the press head 420, having elasticity, and having a volume that varies as gas is introduced into or discharged from the variable volume body 430. Further, the forming module 400 may further include: a mold transfer device coupled to the mold 410 and configured to move the mold 410 upward or downward; and a forming housing 460 which is a housing having an internal space. In this case, the mold 410, the press head 420, the variable volume body 430, and the mold transfer device may be provided in the internal space of the forming housing 460.

Further, as the volume of the variable volume body 430 changes, the variable volume body 430 may come into contact with the protective film 60 positioned on the mold 410 and press the protective film 60, thereby forming the protective film 60 having a 3D shape. To this end, the forming module 400 may further include: a valve 451 configured to allow the gas transmitted from the outside to selectively pass through the valve 451; and a forming pump 452 which is a pump disposed between the valve 451 and the variable volume body 430 and configured to provide pressure to gas that passes through the valve 451 and is supplied to the variable volume body 430.

The variable volume body 430 may be made of a material having elasticity. Specifically, the variable volume body 430 may be made of natural rubber or a polymer material. In the embodiment of the present invention, the configuration has been described in which the variable volume body 430 is made of the above-mentioned material. However, the present invention is not necessarily limited thereto, and the variable volume body 430 may be made of other materials having elasticity.

Further, a shape of the variable volume body 430 with the increased volume may be a rectangular parallelepiped shape having an edge formed as a curved surface. Therefore, a press process may be performed, in which a bottom surface of the variable volume body 430 with the increased volume comes into contact with the protective film 60, and the variable volume body 430 presses the protective film 60 on the mold 410 as the mold 410 moves upward.

Specifically, before the variable volume body 430 comes into contact with the protective film 60, a part of the gas is introduced into the variable volume body 430, such that the variable volume body 430 is partially expanded and then comes into contact with the protective film 60 to fix the protective film 60. After the protective film 60 and the variable volume body 430 are in contact with each other, the remaining part of the gas is introduced into the variable volume body 430, and the variable volume body 430 is expanded, such that 3D forming may be performed on the protective film 60 in accordance with a shape of the mold 410 having a curved portion or the like.

A gas pressure sensor 453 may be provided in the forming module 400 and measure pressure of the gas in the variable volume body 430 in order to control the gas to be introduced into or discharged from the variable volume body 430. The gas pressure sensor 453 transmits information on the gas pressure in the variable volume body 430 to the control unit 721. The control unit 721 may transmit a control signal to the forming pump 452 so that the gas pressure in the variable volume body 430, i.e., the amount of gas in the variable volume body 430 is controlled on the basis of the corresponding information.

The mold transfer device may include: a mold support unit 441 configured to support the mold 410; a mold transfer driving unit coupled to the mold support unit 441 and configured to move the mold support unit 441 in the upward/downward direction by transmitting driving power to the mold support unit 441; and a mold transfer guide unit 443 coupled to the mold support unit 441 and configured to guide a movement of the mold support unit 441 in the upward/downward direction.

The mold support unit 441 may have a mold support unit hole 441a which is a hole formed through the mold support unit 441 in the upward direction from a lower portion of the forming housing 460. An internal thread may be formed on an inner surface of the mold support unit hole 441a. Further, the mold transfer driving unit may include: a mold transfer rotating body having a shape having an external thread formed on an outer surface thereof and screw-coupled to the internal thread of the mold support unit hole 441a such that the mold transfer rotating body rotates; and a mold transfer motor 442 coupled to the mold transfer rotating body and configured to transmit rotation driving power to the mold transfer rotating body.

The mold transfer guide unit 443 may include: a guide body 443e having a plate shape and coupled to the mold support unit 441; a first guide movable body 443a provided at one side of the mold transfer guide body 443e and having a first guide hole which is a hole formed through the first guide movable body 443a in the upward direction from the lower portion of the forming housing 460; a second guide movable body 443b provided at the other side of the mold transfer guide body 443e and having a second guide hole which is a hole formed through the second guide movable body 443b in the upward direction from the lower portion of the forming housing 460; a first guide bar 443c coupled to the first guide movable body 443a while penetrating the first guide hole; and a second guide bar 443d coupled to the second guide movable body 443b while penetrating the second guide hole. In this case, the first and second guide movable bodies 443a and 443b may each have a cylindrical shape.

When the mold transfer rotating body is rotated in one direction by the rotation of the mold transfer motor 442, the mold support unit 441 may move upward, and the guide body 443e coupled to the mold support unit 441 may also move upward. In this case, the first guide movable body 443a steadily moves upward while being guided by the first guide bar 443c, and the second guide movable body 443b steadily moves upward while being guided by the second guide bar 443d, such that the mold support unit 441 may move upward in a constant direction, and as a result, the mold 410 may move upward in a constant direction.

In addition, when the mold transfer rotating body is rotated in the other direction by the rotation of the mold transfer motor 442, the mold support unit 441 may move downward, and the guide body 443e coupled to the mold support unit 441 may also move downward. In this case, the first guide movable body 443a steadily moves downward while being guided by the first guide bar 443c, and the second guide movable body 443b steadily moves downward while being guided by the second guide bar 443d, such that the mold support unit 441 may move downward in a constant direction, and as a result, the mold 410 may move downward in a constant direction.

The protective film 60, which is picked up by the loading pick-up device 114 in the alignment module 300 and moved onto the mold 410 by the movement of the loading arm unit 110, may be separated from the loading pick-up device 114 and seated on the mold 410. When the protective film 60 is seated on the mold 410 as described above, the pick-up alignment unit may be moved to the outside of the forming housing 460 by the movement of the loading arm unit 110 by the arm driver 130.

Further, the mold support unit 441 moves upward, such that the protective film 60 on the mold 410 may move upward so as to be adjacent to the variable volume body 430. In this case, the partially expanded variable volume body 430 and the protective film 60 come into contact with each other, such that the protective film 60 may be pressed by the partially expanded variable volume body 430. Thereafter, gas is additionally introduced into the variable volume body 430, and the variable volume body 430 is expanded, such that the forming process using the mold 410 may be performed.

After the forming process on the protective film 60 is completed, the mold 410 may be moved downward to be separated from the variable volume body 430 by the operation of the mold transfer device. When the mold 410 is separated from the variable volume body 430 as described above, the gas stored in the variable volume body 430 by the operation of the forming pump 452 may be discharged to the outside of the forming module 400 while sequentially passing through the forming pump 452 and the valve 451.

With this configuration, the forming processes are automatically performed on the protective films 60 in the plurality of forming modules 400, such that a large number of formed protective films 60 may be obtained. Further, the forming process is performed on the protective film 60 by using the variable volume body 430, such that 3D forming may be easily performed on the protective film 60 so that the protective film 60 has a curved portion or the like.

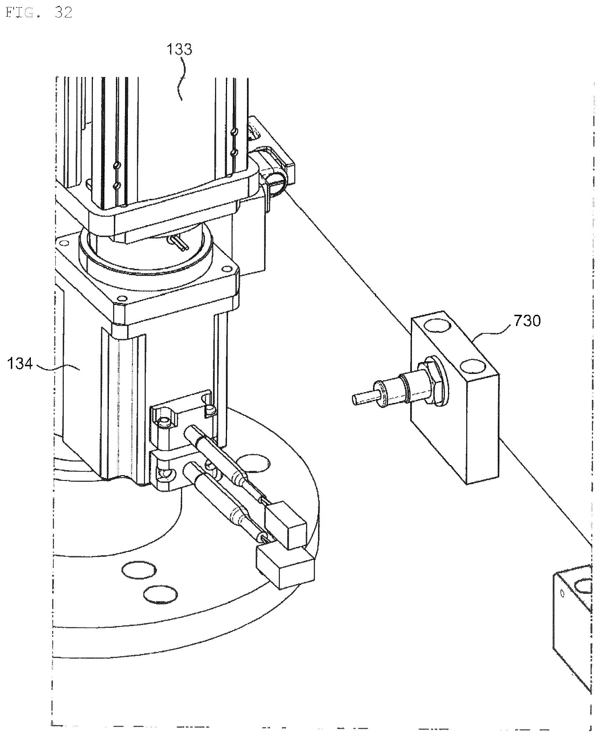

FIG. 32 is a schematic view of a docking connector 730 according to the embodiment of the present invention. As illustrated in FIG. 32, the loading module 200, the alignment module 300, the forming module 400, and the unloading module 500 may each have a docking connector 730 for receiving power and the control signal. Specifically, the docking connector 730 may be provided on an outer surface of the loading housing 290, an outer surface of the alignment housing 350, an outer surface of the forming housing 460, or an outer surface of the unloading housing 560. The power or the control signal may be transmitted to the components provided in each of the modules through the docking connector 730 described above.

The casing 740 may include a plurality of doors through which the user may check the interior of the frame. Specifically, the casing 740 may include: a loading door 741 provided at a position corresponding to the loading module 200 and configured to be openable and closable and used to check the interior of the loading module 200; an alignment door 742 provided at a position corresponding to the alignment module 300 and configured to be openable and closable and used to check the interior of the alignment module 300; an unloading door 743 provided at a position corresponding to the unloading module 500 and configured to be openable and closable and used to check the interior of the unloading module 500; and a forming door 744 provided at a position corresponding to the forming module 400 and configured to be openable and closable and used to check the interior of the forming module 400.

The user may open the loading door 741 and then load the assembly of pre-formed protective films 60 into the loading cartridge 220. In addition, the user may open the unloading door 743 and unload the assembly of the formed protective films 60 from the unloading cartridge 510. In addition, the user may open the alignment door 742 and then remove the two or more stacked protective films 60. Further, the user may open the forming door 744 and then replace the mold 410 installed in the forming module 400.

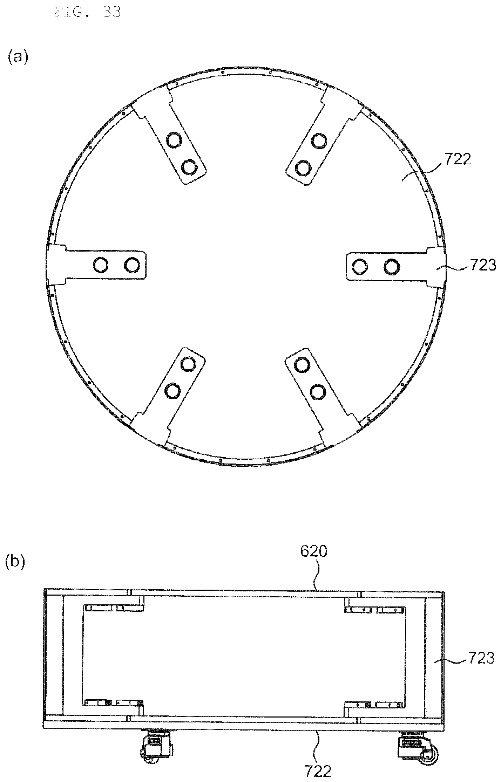

FIG. 33 is an interior top plan view and a side view of the lower module 720 according to the embodiment of the present invention. FIG. 33A is an interior top plan view of the lower module 720, and FIG. 33B is an interior side view of the lower module 720.

As illustrated in FIG. 33, the lower module 720 may include: a lower module lower plate 722 having a plate shape and provided below the lower plate 620; and lower module support bodies 723 provided between the lower plate 620 and the lower module lower plate 722 and coupled to the lower plate 620 and the lower module lower plate 722. In this case, the lower module lower plate 722 may support the plurality of lower module support bodies 723, and the plurality of lower module support bodies 723 may support the lower plate 620, such that the internal space of the lower module 720 may be defined.

The upper module 710 may have the same structure as the lower module 720. Specifically, the upper module 710 may include: an upper module upper plate 712 having a plate shape and provided above the upper plate 610; and upper module support bodies 713 provided between the upper module upper plate 712 and the upper plate 610 and coupled to the upper module upper plate 712 and the upper plate 610. In this case, the upper plate 610 may support the plurality of upper module support bodies 713, and the plurality of upper module support bodies 713 may support the upper module upper plate 712, such that the internal space of the upper module 710 may be defined.

Hereinafter, a manufacturing method according to the present invention using the apparatus according to the present invention will be described.

In a first step, the loading arm unit 110 may move, and the pick-up alignment unit may pick up the protective film 60 accommodated in the loading module 200. Specifically, the loading arm unit 110 may be moved by the operations of the arm driving rotation motor 134 and the loading motor 131, and the pick-up alignment unit may move to a position above the loading film transfer body 210 and pick up the pre-formed protective film 60.

In a second step, the protective film 60 may be moved from the loading module 200 to the alignment module 300 by the loading arm unit 110, and the protective film 60 may be aligned in the alignment module 300. Specifically, the pick-up alignment unit may be moved as the loading arm unit 110 is moved by the operations of the arm driving rotation motor 134 and the loading motor 131, such that the protective film 60 may be moved, and the protective film 60 moved as described above may be seated on the alignment pad 310. Thereafter, the protective film 60 may be aligned by the operations of the outer alignment bar 112 and the inner alignment bar 111 by the interval adjuster 113.

In a third step, the protective film 60 may be moved from the alignment module 300 to the forming module 400 by the loading arm unit 110, and the forming module 400 may perform the forming process on the protective film 60. Specifically, as the loading arm unit 110 is moved by the operations of the arm driving rotation motor 134 and the loading motor 131, the pick-up alignment unit may move to the position above the alignment pad 310 and pick up the protective film 60. Further, as the loading arm unit 110 moves again, the protective film 60 may be moved onto the mold 410, and then the protective film 60 may be seated on the mold 410. Further, as the mold 410 moves upward, the protective film 60 is pressed by the variable volume body 430 with the increased volume, such that the forming process may be performed on the protective film 60.

In a fourth step, the protective film 60 may be moved to the unloading module 500 by the unloading arm unit 120, and the protective film 60 may be accommodated and stored in the unloading module 500. Specifically, after the mold 410 moves downward and the mold 410 separates from the variable volume body 430, the unloading arm unit 120 is moved by the operations of the arm driving rotation motor 134 and the unloading motor 132, and the unloading pick-up device 121 moves to the position above the mold 410 and picks up the formed protective film 60. Further, as the unloading arm unit 120 moves again, the unloading pick-up device 121 moves the protective film 60 onto the unloading film transfer support body 520, and then the protective film 60 may be seated on the unloading film transfer support body 520.

The other detailed configurations related to the manufacturing method according to the present invention are identical to the configurations related to the apparatus according to the present invention.

Hereinafter, the configuration in which the film detection indicator 810 or the tolerance detection indicator 820 improves precision in performing the forming process on the protective film 60 will be described.

The tolerance detection indicator 820 may be printed or imprinted on each of the plurality of modules. Specifically, the tolerance detection indicator 820 may be formed on the loading module 200, the alignment module 300, the forming module 400, or the unloading module 500. However, the present invention is not limited thereto, and other methods such as a method of attaching the tolerance detection indicator 820 may be used.

In addition, the apparatus according to the present invention may further include the image capturing unit coupled to the transfer unit 100 and configured to create a captured image by capturing an image of the tolerance detection indicator 820. Further, the image capturing unit may capture the image of the film detection indicator 810 when the protective film 60 is moved and seated at a predetermined position in the forming apparatus 50.

The tolerance detection indicator 820 may be formed on a surface of the housing of each of the modules, such as the loading housing 290 of the loading module 200, the alignment housing 350 of the alignment module 300, the forming housing 460 of the forming module 400, or the unloading housing 560 of the unloading module 500. Alternatively, the tolerance detection indicator 820 may be formed on a surface of the component provided in each of the housings.

In this case, the tolerance detection indicator 820 may be imprinted, printed, or attached. The tolerance detection indicator 820 may be imprinted on the surface of the module by a laser or the like. Alternatively, the tolerance detection indicator 820 may be printed on the surface of the module. Alternatively, the tolerance detection indicator 820 may be installed as the tolerance detection indicator 820 is imprinted or printed on a substrate and then the substrate is attached to the surface of each of the modules.

The image capturing unit may include a robot arm camera coupled to the robot arm and configured to capture an image of the film detection indicator 810 or the tolerance detection indicator 820. In this case, the robot arm camera may include a loading arm camera 141 and an unloading arm camera 142 which will be described below.

The robot arm camera may include the loading arm camera 141 coupled to the loading arm unit 100 and configured to capture the image of the film detection indicator 810 or the tolerance detection indicator 820. Further, the robot arm camera may include the unloading arm camera 142 coupled to the unloading arm unit 120 and configured to capture the image of the film detection indicator 810 or the tolerance detection indicator 820. In this case, the loading arm camera 141 may be coupled to the outer loading arm 116, and the unloading arm camera 142 may be coupled to the outer unloading arm 123. Therefore, the image of the film detection indicator 810 or the tolerance detection indicator 820 may be easily captured by each of the camera.

The loading arm camera 141 may capture the image within a range of 360 degrees. Likewise, the unloading arm camera 142 may also capture the image within a range of 360 degrees. Therefore, even though the movements of the loading arm unit 110 and the unloading arm unit 120 are restricted, the loading arm camera 141 and the unloading arm camera 142 may easily capture the image of the film detection indicator 810 or the tolerance detection indicator 820.

In this case, the image of the tolerance detection indicator 820 may be captured in real time while the protective film 60 is moved by the transfer unit 110. After the protective film 60 is seated on a predetermined component as described below, the image of the film detection indicator 810 on the protective film 60 separated from the transfer unit 110 may be captured in real time.

The image captured by the loading arm camera 141 or the unloading arm camera 142 is transmitted to the control unit 721, and the control unit 721 analyzes the captured image transmitted from the image capturing unit and derives an image change value of the film detection indicator 810 or the tolerance detection indicator 820, thereby deriving a three-dimensional position change value of any one of the plurality of components installed in the plurality of modules.

The captured images may include a film detection indicator image which is an image of the film detection indicator 810, and a tolerance detection indicator image which is an image of the tolerance detection indicator 820.

The control unit 721 may transmit a control signal to the transfer unit so that the transfer of the protective film 60 is controlled on the basis of the three-dimensional position change value of the tolerance detection indicator 820. Further, the control unit may transmit a control signal to the transfer unit so that the transfer of the protective film 60 is controlled on the basis of the three-dimensional position change value of the film detection indicator 810. Further, the transfer unit 100 may correct the movement or position of the protective film 60 in response to the control signal.

As the control unit 721 derives the image change value of the tolerance detection indicator 820, it is possible to derive a three-dimensional numerical value change value of the protective film 60 or a three-dimensional numerical value change value of each of the plurality of modules.

FIG. 7A illustrates an image acquired by the image capturing unit of the forming apparatus 50, FIG. 7B illustrates an image showing detection of line segments from a captured image, FIG. 7C illustrates an image showing detection of all quads, and FIG. 7D illustrates derivation of quads having effective code systems from an image.

As illustrated in FIG. 7A, the image capturing unit may create an image of the captured image by capturing an image of the tolerance detection indicator 820. The film detection indicator image or the tolerance detection indicator image, which is a captured image, may be transmitted to the control unit 721. Further, as illustrated in FIG. 7B, the control unit 721 may detect line segments from the film detection indicator image or the tolerance detection indicator image by using the least square method (LSM) in clusters of similar pixel gradients.

Next, as illustrated in FIG. 7C, the control unit 721 may detect, from the image, all the quads that may be made in a gradient direction. Thereafter, as illustrated in FIG. 7D, the quad having the effective code system may be extracted from the captured image. Further, the control unit 721 acquires poses of the film detection indicator 810 or the tolerance detection indicator 820 present in the camera frame by using homographs and intrinsic estimation. The control unit 721 may derive the image change value of the film detection indicator 810 or the tolerance detection indicator 820 by measuring a three-dimensional inclination or positional movement by measuring a change in coordinate of a vertex of a quadrangle of an outermost periphery.

Further, the control unit 721 may derive the three-dimensional position change value of the component having the film detection indicator 810 or the tolerance detection indicator 820 in each of the modules by analyzing the three-dimensional inclination or positional movement of the film detection indicator 810 or the tolerance detection indicator 820.

During the operation of the forming apparatus 50, values of changes in X, Y, and Z axes for the respective parts of the components may be created in respect to changes such as extension, compression, bending, shearing, torsion, and the like occurring on any one of the plurality of modules or the components provided in the corresponding module and separation between fastened parts caused by the accumulation of vibration. In this case, the three-dimensional inclination or positional movement of the tolerance detection indicator 820 may occur.

In addition, during the opera ion of the tormina apparatus 50, the protective film 60 may be seated in a posture different from a predetermined posture when the protective film 60 is seated on the predetermined component such as the loading film transfer body 210, the alignment pad 310, the mold 410, or the unloading film transfer body 530. In this case, the three-dimensional inclination or positional movement of the film detection indicator 810 may occur.

The control unit 721 may derive the three-dimensional coordinate change values for the respective portions of the film detection indicator 810 or the tolerance detection indicator 820 by analyzing the three-dimensional inclination or positional movement of the film detection indicator 810 or the tolerance detection indicator 820 by using a predetermined program. Further, the control unit 721 may derive the three-dimensional position change value of the component by using the three-dimensional coordinate change value of the film detection indicator 810 or the tolerance detection indicator 820.

The above-mentioned program may store data made by performing simulation on the three-dimensional coordinate change values for the respective portions of the film detection indicator 810 or the tolerance detection indicator 820 according to the three-dimensional inclination or positional movement of the film detection indicator 810 or the tolerance detection indicator 820.

Further, the control unit may derive the three-dimensional coordinate change values for the respective portions of the tolerance detection indicator 820 by comparing the stored data with the data in respect to the three-dimensional inclination or positional movement of the tolerance detection indicator 820 made by analyzing the tolerance detection indicator image.

In addition, the control unit may derive the three-dimensional coordinate change values for the respective portions of the film detection indicator 810 by comparing the stored data with the data in respect to the three-dimensional inclination or positional movement of the film detection indicator 810 made by analyzing the film detection indicator image.

As described above, the control unit 721 may transmit the control signal to the transfer unit 100 so that the transfer of the protective film 60 is controlled on the basis of the three-dimensional position change value of the tolerance detection indicator 820. Further, when positioning the protective film 60 on a predetermined component in any one of the plurality of modules, the transfer unit 100 may move the protective film 60 while adjusting motion deviation of the protective film 60.

Specifically, at the time of positioning the protective film 60 on the mold of the forming module, the control unit 721 may derive the three-dimensional position change value of the mold by analyzing the captured image of the tolerance detection indicator 820 formed on the mold or the component disposed adjacent to the mold. Further, the control unit 721 may transmit a control signal, which contains information on a correction value in respect to the position of the mold, to the transfer unit 100 by using the three-dimensional position change value of the mold.

The above-mentioned configuration may be equally applied to the situation in which the transfer unit 100 moves the protective film 60 or the transfer unit 100 seats the protective film 60 on a predetermined component such as the loading film transfer body 210, the alignment pad 310, or the unloading film transfer body 530 which is the component other than the mold 410.

After the transfer unit 100 receives the control signal, the transfer unit 100 corrects a transfer route and a seating position for the protective film 60 which are set before the control signal is received. Then, the transfer unit 100 may transfer the protective film 60, such that the motion deviation of the protective film 60 may be adjusted, and thus an error related to the forming process on the protective film 60 may be reduced.

Further, as described above, on the basis of the three-dimensional position change value of the film detection indicator 810, the control unit 721 may transmit a control signal to the transfer unit 100 so that the three-dimensional position of the protective film 60, i.e., the posture of the protective film 60 are controlled and corrected. In this case, the loading pick-up device 114 may move the protective film 60 while sucking the protective film 60 by a vacuum as the transfer unit 100 operates. Alternatively, the posture of the protective film 60 may be corrected by the operations of the inner alignment bar 111 and the outer alignment bar 112.

The analysis of the captured image and the process of controlling the operation of the transfer unit 100 using the analysis may be performed in real time and consistently. Further, the analysis of the captured image and the process of controlling the operation of the transfer unit 100 may be performed in real time and consistently even while the respective modules in the apparatus according to the present invention operate.

It will be appreciated that the embodiments of the present invention have been described above for purposes of illustration, and those skilled in the art may understand that the present invention may be easily modified in other specific forms without changing the technical spirit or the essential features of the present invention. Therefore, it should be understood that the above-described exemplary embodiments are illustrative in all aspects and do not limit the present specification. For example, each component described as a single type may be carried out in a distributed manner. Likewise, components described as a distributed type can be carried out in a combined type.

The scope of the present invention is represented by the claims to be described below, and it should be interpreted that the meaning and scope of the claims and all the changes or modified forms derived from the equivalent concepts thereto fall within the scope of the present invention.

### DESCRIPTION OF REFERENCE NUMERALS

- 10:: Raw material processing device
- 20:: Laminating device
- 30:: Shape processing device
- 40:: Indicator forming device
- 50:: Forming apparatus
- 60:: Protective film
- 61:: Intermediate liquid crystal protection film
- 62:: Hard coating surface protection film
- 63:: Adhesive surface protection film
- 100:: Transfer unit
- 110:: Loading arm unit
- 111:: Inner alignment bar
- 112:: Outer alignment bar
- 113:: Interval adjuster
- 114:: Loading pick-up device
- 115:: Inner loading arm
- 116:: Outer loading arm
- 117: : Loading displacement sensor
- 120:: Unloading arm unit
- 121:: Unloading pick-up device
- 122:: Inner unloading arm
- 123:: Outer unloading arm
- 124:: Unloading displacement sensor
- 130:: Arm driver
- 131:: Loading motor
- 131a:: Loading transfer body
- 131b:: Loading transfer brake
- 132:: Unloading motor
- 132a:: Unloading transfer body
- 132b:: Unloading transfer brake
- 133:: Arm driving support part
- 134:: Arm driving rotation motor
- 141:: Loading arm camera
- 142:: Unloading arm camera
- 200:: Loading module
- 210:: Loading film transfer body
- 220:: Loading cartridge
- 221:: Loading accommodation space
- 222:: Loading driver space
- 223:: Loading cartridge separation wall body
- 224:: Loading cartridge separation wall body hole
- 230:: Loading film transfer support body
- 240:: Loading driver
- 250:: Loading pad
- 260:: Loading delivery unit
- 261:: Film feeder
- 261a:: Pressing feeder body
- 261b:: Feeder driving body
- 261c:: Feeder driving hole
- 261d:: Rotation hole
- 262:: Feeder driver
- 262a:: Feeder rotating body
- 262b:: Feeder protrusion
- 262c:: Feeder rotary motor
- 271:: Sliding support body
- 272:: Film feeder support body
- 272a:: Film feeder support pin
- 281:: Loading ionizer
- 282:: Loading pad pressure sensor
- 283:: Loading vacuum pump
- 290:: Loading housing
- 300:: Alignment module
- 310:: Alignment pad
- 311:: Laser through-hole
- 320:: Alignment driver
- 331:: Light-emitting part
- 332:: Light-receiving part
- 333:: Light-receiving part support
- 341:: Alignment pad pressure sensor
- 342:: Alignment vacuum pump
- 350:: Alignment housing
- 400:: Forming module
- 410:: Mold
- 420:: Press head
- 430:: Variable volume body
- 441:: Mold support unit
- 441a:: Mold support unit hole
- 442:: Mold transfer motor
- 443:: Mold transfer guide unit
- 443a:: First guide movable body
- 443b:: Second guide movable body
- 443c:: First guide bar
- 443d:: Second guide bar
- 443e:: Guide body
- 451:: Valve
- 452:: Forming pump
- 453:: Gas pressure sensor
- 460:: Forming housing
- 500:: Unloading module
- 510:: Unloading cartridge
- 511:: Unloading accommodation space
- 512:: Unloading driver space
- 513:: Unloading cartridge separation wall body
- 514:: Unloading cartridge separation wall body hole
- 520:: Unloading film transfer support body
- 530:: Unloading film transfer body
- 540:: Unloading driver
- 550:: Unloading ionizer
- 560:: Unloading housing
- 610:: Upper plate
- 620:: Lower plate
- 630:: Frame support unit
- 631:: Main support body
- 632:: Auxiliary support body
- 710:: Upper module
- 711:: Power source unit
- 712:: Upper module upper plate
- 713:: Upper module support body
- 720:: Lower module
- 721:: Control unit
- 722:: Lower module lower plate
- 723:: Lower module support body
- 730:: Docking connector
- 740:: Casing
- 741:: Loading door
- 742:: Alignment door
- 743:: Unloading door
- 744:: Forming door
- 810:: Film detection indicator
- 820:: Tolerance detection indicator
- 830:: Matching image
- 910:: Electronic device
- 911:: Display
- 920:: NFC tag

## Claims

1. A system for manufacturing a 3D protective film with improved positioning precision during manufacturing and improved convenience during attachment, the system comprising:
an indicator forming device forming a film detection indicator having a predetermined shape on a protective film protecting a liquid crystal surface of an electronic device; and
a forming apparatus performing a forming process on the protective film,
wherein the forming process is selectively performed on the protective film by the forming apparatus, and
wherein a movement and a position of the protective film are corrected by the film detection indicator when the forming process is performed on the protective film, such that precision in forming the protective film is improved.

2. The system of claim 1, further comprising:
a raw material processing device processing an intermediate raw material, which is a raw material of an intermediate liquid crystal protection film included in the protective film; an upper raw material, which is a raw material of a hard coating surface protection film formed on an upper portion of the intermediate liquid crystal protection film; and a lower raw material which is a raw material of an adhesive surface protection film formed on a lower portion of the intermediate liquid crystal protection film;
a laminating device forming a raw lamination material by laminating the upper raw material, the lower raw material, and the intermediate raw material; and
a shape processing device forming the pre-formed protective film by processing the raw lamination material.

3. The system of claim 2, wherein the indicator forming device prints or imprints the film detection indicator on the intermediate liquid crystal protection film, the hard coating surface protection film, or the adhesive surface protection film.

4. The system of claim 1, wherein the film detection indicator is an AprilTag, an Aruco marker, an ARtag, or an ARToolKit.

5. The system of claim 1, wherein the forming apparatus has a tolerance detection indicator formed in a predetermined shape therein, and the movement and the position of the protective film are corrected by the tolerance detection indicator when the forming process is performed on the protective film, such that precision in forming the protective film is improved.

6. The system of claim 5, wherein the tolerance detection indicator is an AprilTag, an Aruco marker, an ARtag, or an ARToolKit.

7. The system of claim 5, wherein the forming apparatus comprises:
a frame;
a plurality of modules coupled to the frame and configured to perform the forming process on the protective film;
a transfer unit provided in the frame and configured to pick up the protective film in the frame and then move the protective film;
an image capturing unit coupled to the transfer unit and creating a captured image by capturing an image of the tolerance detection indicator or the film detection indicator; and
a control unit deriving a three-dimensional position change value of the protective film or any one of a plurality of components installed in the plurality of modules by analyzing the captured image received from the image capturing unit.

8. The system of claim 7, wherein the tolerance detection indicator is printed or imprinted on each of the plurality of modules.

9. The system of claim 7, wherein the control unit transmits a control signal to the transfer unit so that the transfer of the protective film is controlled on the basis of a three-dimensional position change value of the tolerance detection indicator.

10. The system of claim 7, wherein the control unit transmits a control signal to the transfer unit so that the transfer of the protective film is controlled on the basis of a three-dimensional position change value of the film detection indicator.

11. The system of claim 7, wherein the transfer unit comprises a robot arm picking up and moving a pre-formed protective film or a post-formed protective film.

12. The system of claim 11, wherein the image capturing unit comprises a robot arm camera coupled to the robot arm and capturing an image of the film detection indicator or the tolerance detection indicator.

13. The system of claim 1, wherein the electronic device comprises a liquid crystal display.

14. A method of attaching a protective film, the method comprising:
a first step of recognizing, by an electronic device, a predetermined uniform resource locator (URL), a uniform resource name (URN), or a uniform resource identifier (URI) by placing an NFC tag adjacent to the electronic device or using a camera of the electronic device;
a second step of accessing, by the electronic device, the URL, the URN, or the URI and displaying a matching image, which is an image matched with a film detection indicator formed on the protective film matched with the electronic device, on a display of the electronic device; and
a third step of attaching the protective film to a position at which the film detection indicator and the matching image correspond to each other on the display.

15. A method of attaching a protective film, the method comprising:
a first step of placing an NFC tag adjacent to an electronic device and recognizing, by the electronic device, information stored in the NFC tag;
a second step of displaying a matching image, which is an image matched with a film detection indicator formed on the protective film matched with the electronic device, on a display of the electronic device; and
a third step of attaching the protective film to a position at which the film detection indicator and the matching image correspond to each other on the display.
